(19) Europäisches Patentamt
European Patent Office
Office européen des brevets

(11) **EP 4 133 705 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(51) Internationale Patentklassifikation (IPC):
*H04L 9/40* *(2022.01)* *H04L 67/00* *(2022.01)*
*H04M 1/72403* *(2021.01)* *H04W 12/48* *(2021.01)*

(21) Anmeldenummer: **21717872.2**

(52) Gemeinsame Patentklassifikation (CPC):
**H04L 63/18; H04L 67/34; H04M 1/72403; H04W 12/48;** H04M 1/72463

(22) Anmeldetag: **09.04.2021**

(86) Internationale Anmeldenummer:
**PCT/EP2021/059310**

(87) Internationale Veröffentlichungsnummer:
**WO 2021/205003 (14.10.2021 Gazette 2021/41)**

(54) **TELEFONNUMMERVERIFIZIERUNG**

TELEPHONE NUMBER VERIFICATION

VÉRIFICATION DE NUMÉRO DE TÉLÉPHONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **09.04.2020 EP 20169014**

(43) Veröffentlichungstag der Anmeldung:
**15.02.2023 Patentblatt 2023/07**

(73) Patentinhaber: **Anbarchian, Vida**
**10719 Berlin (DE)**

(72) Erfinder: **HOMBURG, Karl-Wilhelm**
**14193 Berlin (DE)**

(56) Entgegenhaltungen:
**JP-A- 2016 018 550    US-A1- 2014 335 822**

EP 4 133 705 B1

**Beschreibung**

Die vorliegende Erfindung die Verifizierung der Telefonnummer eines Telekommunikationsendgeräts nach einem vorangegangenen Download einer Anwendungssoftware, durch Ermitteln der Herkunftstelefonnummer des Telekommunikationsendgeräts und deren Zuordnung zu wenigstens einer Date.

**Hintergrund**

Heutige Telekommunikationsendgeräte, wie beispielsweise Smartphones bieten die Möglichkeit, ein breites Spektrum von Anwendungssoftware wie etwa Applikationen auf diesen Endgeräten zu installieren und auszuführen. Solche Applikationen können in Kontakt mit verschiedenen, in den Rechnernetzen verteilten Diensten treten. Beispiele für solche Dienste sind Softwareanbieter, Online-Shops und soziale Netzwerke.

Im Rahmen dessen besteht das Bedürfnis seitens von Dienstanbietern für Anwendungssoftware wie Applikationen, die Mobiltelefonnummer des Benutzers und damit schließlich auch die Identität des Benutzers zu kennen, welcher beispielsweise eine Applikation von einem Server des Dienstanbieters auf sein mobiles Endgerät herunterlädt. Auf diese Weise können etwa betrügerische Aktivitäten im Zusammenhang mit der heruntergeladenen Applikation erschwert oder erkannt werden.

Telekommunikationsendgeräte wie Mobiltelefone sind im technischen Sinn nicht durch ihre Telefonnummer gekennzeichnet, sondern nur durch die Nummer ihrer SIM-Karte (sogenannte IMSI) und ihre Gerätenummer (sogenannte IMEI). Die nur aus Nutzersicht gegebene Telefonnummer ist dem Mobiltelefon nur durch den Netzbetreiber zugeordnet. Somit ist es einem Dienstanbieter in der Regel nicht möglich, über die IMSI oder die IMEI auf die Identität eines Benutzers schließen zu können.

Aus dem Stand der Technik sind beispielsweise Verfahren bekannt, nach der Installation der Applikation eine Kurznachricht, beispielsweise eine SMS (Short Message Service) zu versenden, auf die der Nutzer antworten muss. Dies setzt jedoch ein einwandfreies Funktionieren des SMS-Dienstes und i.a. ein nahezu unverzögertes Übertragen der SMS-Nachrichten voraus, was in manchen Weltregionen nicht sichergestellt ist. Zudem fallen bei Benutzung des SMS-Dienstes in der Regel Gebühren an. Dies kann für einen Nutzer unerwünscht sein, da dieser in der Regel nicht bereit ist, für derartige vorgenannte Verfahren im Rahmen einer Installation einer Anwendungssoftware gesondert Gebühren entrichten zu müssen.

US 2014/335822 (A1) describes methods and apparatuses for receiving a request from a mobile application identifying a callee and a communication reference, assigning a call-in reference to the request, temporarily associating the communication reference and the call-in reference for a period of time, receiving a call from a mobile device having the communication reference, authenticating the received call based on the association of the communication reference and the call-in reference, and connecting the call to a callee after the call is authenticated.

**Kurzfassung**

Die Erfindung betrifft gemäß Anspruch 1 ein Verfahren zum Ermitteln einer Herkunftstelefonnummer eines Telekommunikationsendgeräts und deren Zuordnung zu wenigstens einer Date, die im Rahmen einer Installation einer Anwendungssoftware auf dem Telekommunikationsendgerät an den Server übermittelt wird oder mit einem Download der Anwendungssoftware verknüpft ist oder in der downgeloadeten Anwendungssoftware enthalten ist, durch einen Server, wobei das Verfahren umfasst:

- Auswählen einer Server-Telefonnummer zum Zwecke der durchzuführenden Zuordnung aus einer Menge von mehreren möglichen Server-Telefonnummern;
- Übermitteln der Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
- Detektieren einer vom Telekommunikationsendgerät an die Server-Telefonnummer gerichteten Sprachruf-Aufbauanfrage, wobei die Herkunftstelefonnummer mit der Sprachruf-Aufbauanfrage übermittelt wird;
- Zuordnen der mit der Sprachruf-Aufbauanfrage übermittelten Herkunftstelefonnummer zu der wenigstens einen Date,

wobei der Sprachanruf-Aufbauanfragen nicht entsprochen wird und kein Rufaufbau erfolgt.

Das Verfahren kann weiter umfassen:

- Auswählen einer zweiten Server-Telefonnummer zum Zwecke der durchzuführenden Zuordnung aus einer Menge von mehreren möglichen Server-Telefonnummern;
- Übermitteln der zweiten Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
- Detektieren einer vom Telekommunikationsendgerät an die zweite Server-Telefonnummer gerichteten zweiten Sprachruf-Aufbauanfrage, wobei die Herkunftstelefonnummer mit der zweiten Sprachruf-Aufbauanfrage übermittelt wird;
- Verifizieren, ob die die mit den beiden Sprachanruf-Aufbauanfragen übermittelten Herkunftstelefonnummern identisch sind;
- bei positivem Ausgang der Verifizierung, Zuordnen der mit der Sprachruf-Aufbauanfrage übermittelten Herkunftstelefonnummer zu der wenigstens einen Date,

wobei auch der zweiten Sprachanruf-Aufbauanfrage nicht entsprochen wird und kein Rufaufbau erfolgt.

Ein weiterer Aspekt betrifft ein Verfahren zum Übermitteln einer Herkunftstelefonnummer eines Telekommunikationsendgeräts an einen Server und deren Zuordnung zu wenigstens einer im Rahmen einer Installation einer Anwendungssoftware auf dem Telekommunikationsendgerät an den Server übermittelten oder mit einem Download der Anwendungssoftware verknüpften oder in der downgeloadeten Anwendungssoftware enthaltenen Date, durch das Telekommunikationsendgerät, wobei das Verfahren umfasst:

- Empfangen einer von einem Server im Rahmen der Installation der Anwendungssoftware auf dem Telekommunikationsendgerät oder mit dem Download der Anwendungssoftware und an das Telekommunikationsendgerät über Datenkommunikation, nicht aber auf dem Wege eines Anrufs an das Telekommunikationsendgerät übermittelten, durch den Server zum Zwecke der durchzuführenden Zuordnung aus einer Menge von mehreren möglichen Server-Telefonnummern ausgewählten Server-Telefonnummer;
- Absetzen einer an die Server-Telefonnummer gerichteten und von dem Server zu detektierenden Sprachruf-Aufbauanfrage, wobei die von dem Server wenigstens einer Date zuzuordnenden Herkunftstelefonnummer mit der Sprachruf-Aufbauanfrage übermittelt wird und wobei Rufnummernübermittlung aktiviert ist,

wobei der Sprachanruf-Aufbauanfrage nicht entsprochen wird und kein Rufaufbau erfolgt.

Ein weiterer Aspekt betrifft ein Computerprogrammprodukt, umfassend Anweisungen, die auf einem computerlesbaren Speichermedium gespeichert sind, zum Ausführen eines Verfahrens zum Ermitteln einer Herkunftstelefonnummer eines Telekommunikationsendgeräts an einen Server und deren Zuordnung zu wenigstens einer im Rahmen einer Installation einer Anwendungssoftware auf dem Telekommunikationsendgerät an den Server übermittelten oder mit einem Download der Anwendungssoftware verknüpften oder in der downgeloadeten Anwendungssoftware enthaltenen Date, wenn das Computerprogramm auf einem Telekommunikationsendgerät ausgeführt wird, umfassend:

- Lesen einer von einem Server im Rahmen der Installation der Anwendungssoftware auf dem Telekommunikationsendgerät oder mit dem Download der Anwendungssoftware und an das Telekommunikationsendgerät über Datenkommunikation, nicht aber auf dem Wege eines Anrufs an das Telekommunikationsendgerät übermittelten, durch den Server zum Zwecke der durchzuführenden Zuordnung aus einer Menge von mehreren möglichen Server-Telefonnummern ausgewählten Server-Telefonnummer;
- Absetzen einer an die Server-Telefonnummer gerichteten und von dem Server zu detektierenden Sprachruf-Aufbauanfrage, wobei die von dem Server wenigstens einer Date zuzuordnenden Herkunftstelefonnummer mit der Sprachruf-Aufbauanfrage übermittelt wird und wobei Rufnummernübermittelung aktiviert ist,

wobei der Sprachanruf-Aufbauanfrage nicht entsprochen wird und kein Rufaufbau erfolgt.

Im Folgenden werden Ausführungsbeispiele anhand der Zeichnungen näher erläutert.

Figur 1 zeigt eine schematische Darstellung der Beziehung zwischen einem Telekommunikationsendgerät und einem Server.

Figur 2 zeigt ein Beispiel eines Sequenzdiagramms aus der Perspektive des Servers.

Figur 3 zeigt in einem Sequenzdiagramm einer Weiterbildung des Beispiels von Figur 2, welches das Setzen eines Zeitfensters am Server umfasst, innerhalb dessen die serverseitige Bereitschaft zur Detektion einer Sprachruf-Aufbauanfrage besteht.

Figur 4 zeigt in einem Sequenzdiagramm einer Weiterbildung des Beispiels von Figur 3, welches das Setzen des Zeitfensters am Telekommunikationsendgerät umfasst, innerhalb dessen die Sprachruf-Aufbauanfrage an den Server abgesetzt wird.

Figur 5 zeigt ein Ablaufdiagramm für eine erneute Auswahl der Server-telefonnummer.

Figur 6 zeigt eine Ausführungsform anhand eines Sequenzdiagramms, das eine Weiterbildung des Beispiels von Figur 2 mit einer zweiten Server-Telefonnummer ist.

Figur 7 zeigt ein Sequenzdiagramm einer Weiterbildung der Ausführungsform von Figur 6 mit einer zweiten Server-Telefonnummer, welches das Setzen eines Zeitfensters am Server umfasst, innerhalb dessen die serverseitige Bereitschaft zur Detektion einer Sprachruf-Aufbauanfrage besteht, ähnlich dem Beispiel von Fig. 3.

Figur 8 zeigt ein Sequenzdiagramm einer Weiterbildung der Ausführungsform von Figur 7 mit einer zweiten Server-Telefonnummer, welches das Setzen des Zeitfensters am Telekommunikationsendgerät umfasst, innerhalb dessen die Sprachruf-Aufbauanfrage an den Server abgesetzt wird, ähnlich dem Beispiel von Figur 4.

Figur 9 zeigt bei einer Ausführungsform ein Ablaufdiagramm für die erneute Auswahl der Server-Telefonnummer sowie einer zweiten Server-Telefonnummer.

Figur 10 zeigt ein Sequenzdiagramm des Verfahrens entsprechend dem Beispiel von Figur 2, jedoch aus der Perspektive des Telekommunikationsendgeräts.

Figur 11 zeigt ein Sequenzdiagramm des Verfahrens entsprechend dem Beispiel von Figur 3, wiederum aus der Perspektive des Telekommunikationsendgeräts.

Figur 12 zeigt eine Ausführungsform der Erfindung aus der Perspektive des Telekommunikationsendgeräts ähnlich dem Beispiel von Figur 10 mit einer zweiten Server-Telefonnummer.

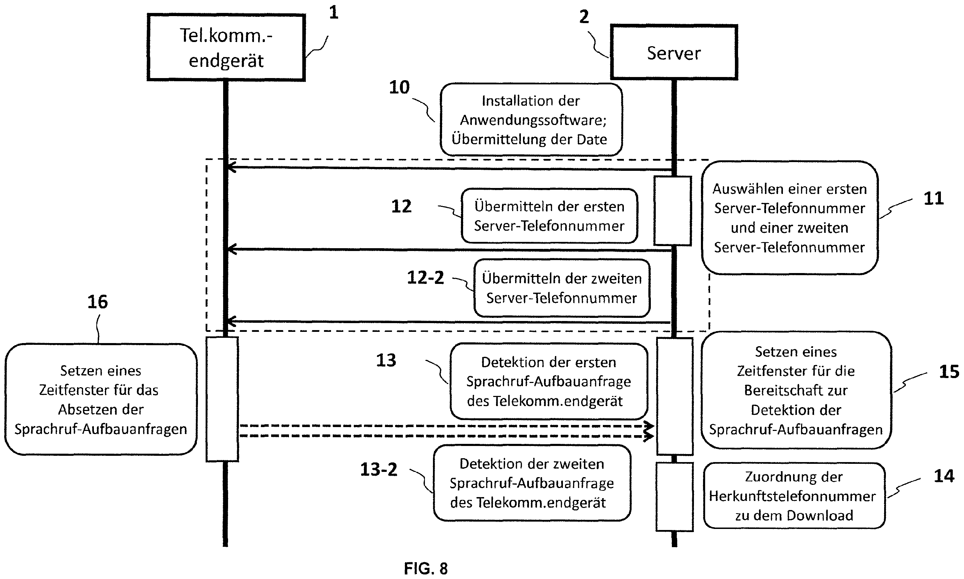

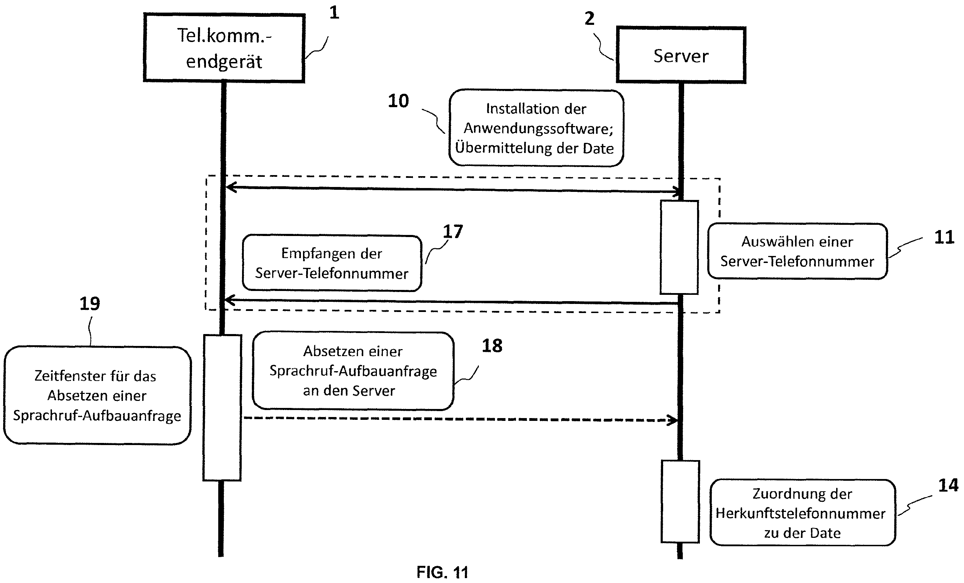

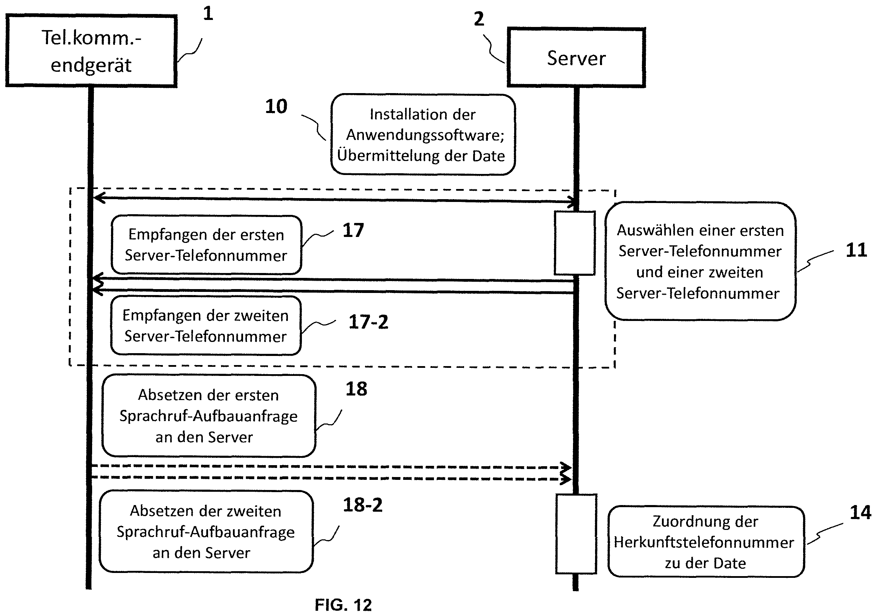

Figur 12 zeigt eine Ausführungsform aus der Perspektive des Telekommunikationsendgeräts gemäß Figur 11 mit einem Setzen des Zeitfensters am Telekommunikationsendgerät ähnlich dem Beispiel von Figur 8.

## Ausführliche Beschreibung

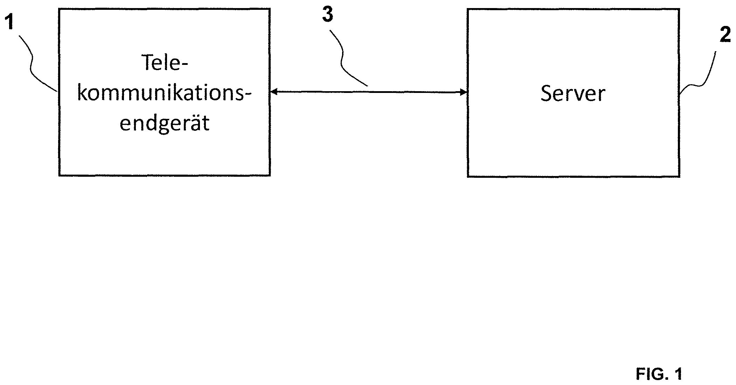

In FIG. 1 ist eine schematische Darstellung einer Beziehung zwischen einem Telekommunikationsendgerät 1 und einem Server 2. Über eine Kommunikationsschnittstelle 3 ist eine Datenkommunikation zwischen dem Telekommunikationsendgerät 1 und dem Server 2 umfasst. In erfindungsgemäßen Ausführungsformen kann das Telekommunikationsendgerät 1 Mobilgeräte wie beispielsweise Smartphones, Tablet-PCs, Notebooks etc. und der Server 2 einen Großrechner oder mehrere, miteinander in Verbindung stehende Großrechner, aber auch jeden anderen Rechner wie z. B. Personal Computer umfassen. Die Kommunikationsschnittstelle 3 kann drahtgebundene oder drahtlose lokale Netzwerke (Local Area Network - LAN) oder drahtgebundene oder drahtlose Metropolitan Area Networks (MAN) oder drahtgebundene oder drahtlose Wide Area Networks (WAN) umfassen. Zusätzlich kann das Telekommunikationsendgerät 1 über das öffentliche Telefonnetz (Festnetz und/oder Mobilfunknetz) mit dem Server 2 kommunizieren.

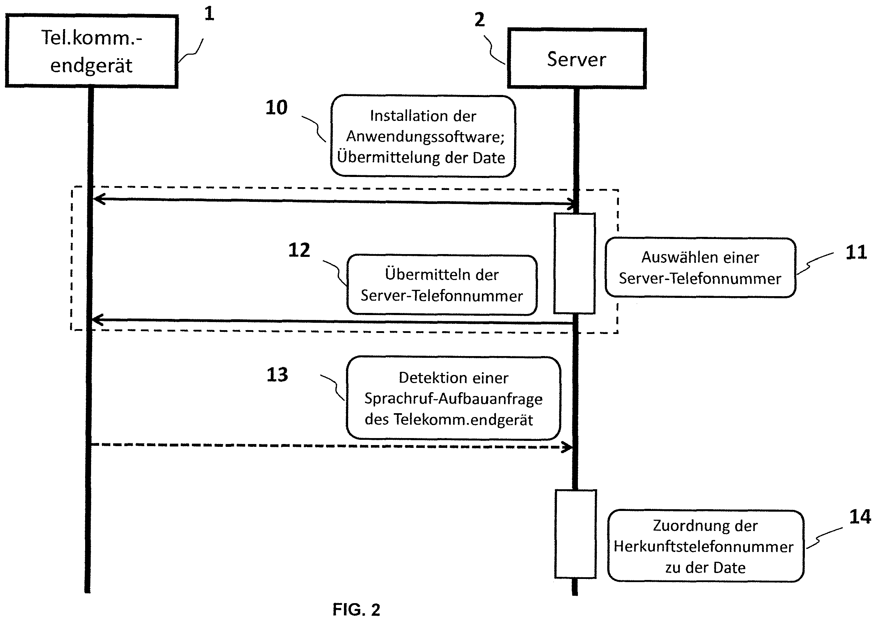

FIG. 2 zeigt ein Sequenzdiagramm zum Ermitteln einer Herkunftstelefonnummer eines Telekommunikationsendgeräts und deren Zuordnung zu wenigstens einer Date aus der Perspektive des Servers 2. Eine Date wird in einer Aktivität 10 im Rahmen einer Installation einer Anwendungssoftware auf dem Telekommunikationsendgerät 1 an den Server 2 übermittelt. Die übermittelte Date kann beispielsweise die International Mobile Station Equipment Identity (IMEI) des Telekommunikationsendgerätes 2 oder die auf der SIM-Karte eines Telekommunikationsendgerätes 2 gespeicherte International Mobile Subscriber Identity (IMSI) umfassen, soweit die betreffende Nummer dem Server 2 bekannt ist. Die Date kann auch mit einem Download der Anwendungssoftware verknüpft oder in der downgeloadeten Anwendungssoftware enthalten sein. Beispielsweise kann die Date eine laufende Nummer umfassen, die bei einem jeweiligen Download der Anwendungssoftware erzeugt wird oder die für eine laufende Kopie der Anwendungssoftware vergeben wird.

Die Übermittelung der Date kann automatisch geschehen, d. h. von dem Nutzer, der eine Anwendungssoftware auf einen Telekommunikationsendgerät installiert, werden keine durchzuführenden Handlungen erwartet.

Im Rahmen der Installation der Anwendungssoftware durch den Nutzer kann die Interaktion des Nutzers umfasst sein. Dem Nutzer, welcher die Anwendungssoftware beispielsweise auf seinem Smartphone installiert, wird im Rahmen des Installationsprozesses ein Link übermittelt, welcher, im Falle seines Anklickens, auf eine Webseite des Anbieters der Anwendungssoftware (z. B. Google-Store) führt, wo der Nutzer aufgefordert wird, beispielsweise seinen Namen oder die Telefonnummer seines Telekommunikationsendgerätes einzugeben.

In einer Aktivität 11 wählt der Server 2 im Rahmen der Installation der Anwendungssoftware (Aktivität 10) eine Server-Telefonnummer zum Zwecke der durchzuführenden Zuordnung der Herkunftstelefonnummer zu der wenigstens einen Date aus einer Menge von mehreren möglichen Server-Telefonnummern aus. Beispielsweise kann die Menge aus einer festen Anzahl fest vorgegebener Telefonnummern bestehen, welche dem Server 2 zugeordnet sind. Bei der Bildung der einzelnen Telefonnummern für die Menge kann beispielsweise analog zur Bildung von Telefonnummern für größere Organisationen, welche aus einer Vielzahl von Organisationseinheiten bestehen, verfahren werden. So kann etwa die Nummernfolge "01234" für den Server selbst, welcher dann analog zur Organisation selbst gesehen wird, vergeben werden und anschließend beispielsweise eine Nummer analog zu einer Organisationseinheit. Letztgenannte Nummer kann etwa aus einer aufsteigenden Nummernfolge beginnend bei "0000" und endend bei "9999", entnommen werden.

In einer Aktivität 12 wird die Server-Telefonnummer an das Telekommunikationsendgerät 1 über Datenkommunikation übermittelt. Die Übermittelung geschieht dabei aber nicht auf dem Wege eines Anrufs an das Telekommunikationsendgerät 1, sondern das Übermitteln findet im Rahmen der Installation der Anwendungssoftware auf dem Telekommunikationsendgerät 1 statt oder erfolgt mit dem Download der Anwendungssoftware. So kann beispielsweise dem Nutzer ein Link auf die Seite des Anbieters (z. B. Google-Store) der Anwendungssoftware auf das Telekommunikationsendgerät 1 übermittelt werden. Klickt der Nutzer auf seinem Telekommunikationsendgerät 1 dann diesem Link an, so wird die Server-Telefonnummer an das Telekommunikationsendgerät 1 übermittelt.

In einer Aktivität 13 detektiert der Server 2 eine vom Telekommunikationsendgerät 1 über das öffentliche Telefonnetz an die Server-Telefonnummer gerichteten Sprachruf-Aufbauanfrage, wobei die Herkunftstelefonnummer mit der Sprachruf-Aufbauanfrage übermittelt wird.

Das Telekommunikationsendgerät 1 kann bei den beschriebenen und in den Figuren dargestellten Ausführungsformen die Sprachruf-Aufbauanfrage an den Server ausführen, ohne dass seitens des Benutzers des Telekommunikationsendgerätes 1 eine Eingabe in das Telekommunikationsendgerät 1 erfolgen muss. Die Sprachruf-Aufbauanfrage geschieht also automatisch ohne Beteiligung des Benutzers.

In einer Aktivität 14 ordnet der Server 2 der mit der Sprachruf-Aufbauanfrage übermittelten Herkunftstelefonnummer zu der wenigstens einen Date zu, also beispielsweise der International Mobile Station Equipment Identity (IMEI) des Telekommunikationsendgerätes 1 oder der auf der SIM-Karte eines Telekommunikationsendgerätes 1 gespeicherte International Mobile Subscriber Identity (IMSI). Die Zuordnung kann auch beispielsweise zu der laufenden Nummer erfolgen, die bei einem jeweiligen Download der Anwendungssoftware erzeugt wird oder die für eine laufende Kopie der Anwendungssoftware vergeben wird.

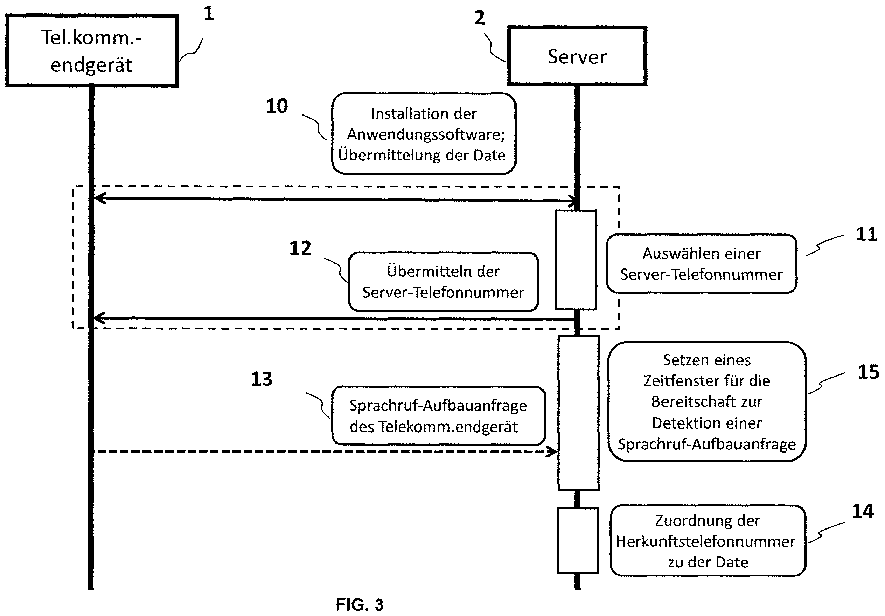

FIG. 3 ist ein Sequenzdiagramm einer Weiterbildung der Ausführungsform von Figur 2 wiederum aus der Perspektive des Servers 2, wobei das Verfahren in einer Aktivität 15 weiter das Setzen eines Zeitfensters durch den Server 2 nach dem Übermitteln der Server-Telefonnummer an das Telekommunikationsendgerät 1, innerhalb dessen der Server 2 für das Detektieren der vom Telekommunikationsendgerät 1 an die Server-Telefonnummer gerichteten Sprachruf-Aufbauanfrage bereit ist, umfasst. Das Setzen des Zeitfensters umfasst hierbei das Setzen eines Zeitpunktes, ab dem das Zeitfenster zu laufen beginnt und das Setzen einer Dauer für das Laufen des Zeitfensters, oder eines Endzeitpunkts.

Das Setzen eines Zeitfensters durch den Server 2 stellt weitestgehend sicher, dass der Date die korrekte Herkunftstelefonnummer zugeordnet wird, also die Herkunftstelefonnummer desjenigen Telekommunikationsendgerätes 2, welches die Installation der Anwendungssoftware angefordert hat.

Die zu setzende Dauer für das Zeitfensters kann sich, aus der Analyse von Zeiträumen ergeben, welche sich in der Vergangenheit zwischen dem Übermitteln der Servertelefonnummern und den darauf folgenden Rufaufbauanfragen seitens der Telekommunikationsendgeräte 1 ergeben haben. Diese Zeiträume ergeben üblicherweise eine Gauß-Verteilung mit einem Erwartungswert und einer Varianz für die Zeiträume. So kann dann die zu setzende Dauer der Mittelwert der Gauß-Verteilung verwendet werden, zu welchem ein Vielfaches der Standartabweichung hinzuaddiert wird.

Die Formel für die Gauß-Verteilung für die vorgenannten Zeiträume ergibt sich zu:

$$f(\Delta t \mid \Delta t_m, \sigma) = \frac{1}{\sqrt{2\pi\sigma^2}} \; e^{\frac{-(\Delta t - \Delta t_m)^2}{2\sigma^2}}$$

Wobei $\Delta t_m$ den Erwartungswert für die Zeiträume und $\sigma^2$ die Varianz und $\sigma$ die Standardabweichung bezeichnet:

Die Dauer ergibt sich gemäß der vorgenannten Definition dann zu:

$$Dauer = \Delta t_m \cdot (fac \cdot \sigma)$$

wobei fac ein beliebiger Faktor sein kann, mit dem die Standartabweichung multipliziert werden kann.

Der Startpunkt für das Zeitfenster kann vorteilhaft gewählt werden, beispielsweise kann als Startpunkt der Zeitpunkt gewählt werden, bei welchen in der Aktivität 12 das Übermitteln der Server-Telefonnummer an das Telekommunikationsendgerät 1 durch den Server 2 erfolgt.

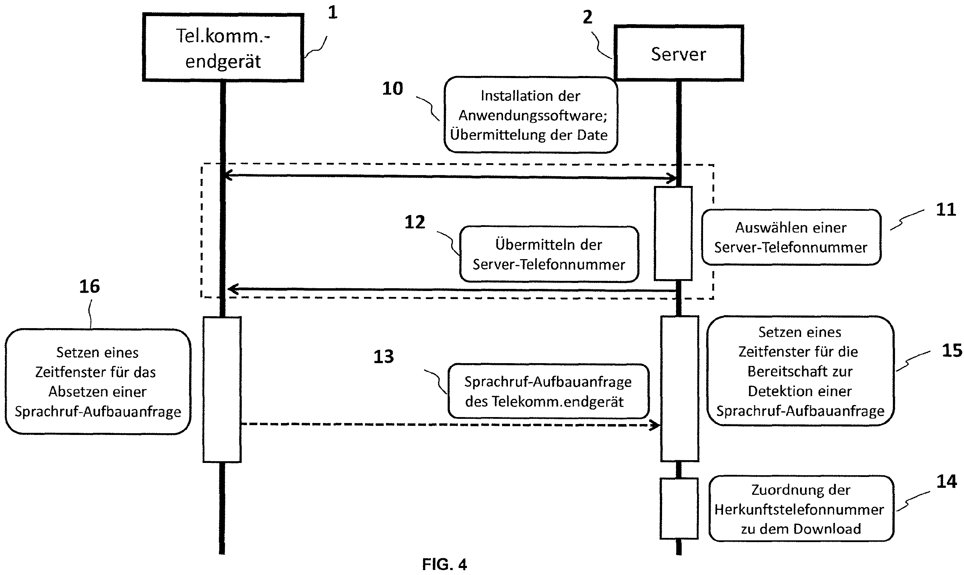

FIG. 4 einer Weiterbildung der Ausführungsform von Figur 3. Neben dem vorgenannten Setzen des Zeitfensters durch den Server 2 umfasst das in FIG. 4 gezeigte Verfahren zusätzlich in einer Aktivität 16 das Setzen des Zeitfensters beim Telekommunikationsendgerät 1, wobei das Übermitteln des entsprechenden Zeitpunktes und der entsprechenden Dauer für das Zeitfenster im Rahmen der Installation der Anwendungssoftware auf dem Telekommunikationsendgerät oder mit dem Download der Anwendungssoftware erfolgt. In dieser Ausführungsform bestimmt das Zeitfenster nicht nur den Startpunkt und die Dauer für die Bereitschaft der Servers 2 für die Detektion der Sprachruf-Aufbauanfrage, sondern der Startpunkt und die Dauer bestimmen auch für das Telekommunikationsendgerät 1 ein Zeitfenster, in dem eine Sprachruf-Aufbauanfrage durchzuführen ist.

Vorteilhaft sollte der Startpunkt für das Zeitfenster beim Telekommunikationsendgerät 1 dem Startpunkt für das Zeitfenster beim Server 2 entsprechen. Wird also für den Startpunkt für das Zeitfenster beim Server 2, wie vorstehend ausgeführt, der Zeitpunkt für das Übermitteln der Server-Telefonnummer durch den Server 2 an das Telekommunikationsendgerät 1 gewählt, so wird als Startpunkt für das Zeitfenster beim Telekommunikationsendgerät 1 der Zeitpunkt des Empfangs der Server-Telefonnummer gewählt, der sich in der Regel nur unwesentlich vom Zeitpunkt des Übermittelns der Server-Telefonnummer unterscheidet.

Die in der Aktivität 12 übermittelte Server-Telefonnummer kann erneut vergeben werden, damit diese nach dem Abschluss einer Verfahrensdurchführung wieder zur Verfügung steht. Dabei kann das Verfahren entweder das Ermöglichen der erneuten Auswahl der Server-Telefonnummer durch den Server umfassen, nachdem das Zeitfenster abgelaufen ist, unabhängig davon, ob die übermittelte Herkunftstelefonnummer zu der wenigstens einen Date zugeordnet worden ist, oder aber das Ermöglichen der erneuten Auswahl der Server-Telefonnummer durch den Server umfassen, nachdem die übermittelte Herkunftstelefonnummer der wenigstens einen Date zugeordnet worden ist, unabhängig davon, ob das Zeitfenster bereits abgelaufen ist.

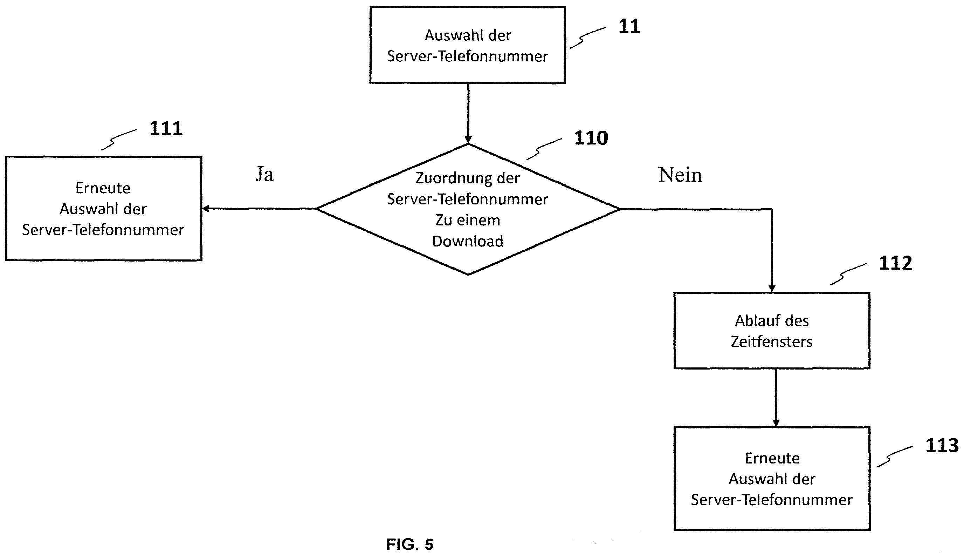

FIG. 5 ist ein Ablaufdiagramm, das darstellt, nach welchen möglichen Situationen es zu einer erneuten Auswahl der bereits in Aktivität ausgewählten Server-Telefonnummer kommen kann. Konnte im Rahmen des erfindungsgemäßen Verfahrens eine Zuordnung der Herkunftstelefonnummer zu der Date erfolgen (Beantwortung der Abfrage 110 in FIG. 5 mit ‚ja"), so hat die in Aktivität 11 ausgewählte Server-Telefonnummer ihren Zweck erfüllt, ist somit wieder frei verfügbar und kann in einer Aktivität 111 wieder ausgewählt werden. War es hingegen nicht möglich, die Herkunftstelefonnummer der Date zuzuordnen (Beantwortung der Abfrage 110 in FIG. 5 mit "nein"), so ist nach Ablauf des Zeitfensters 112 die Server-Telefonnummer ebenfalls wieder frei und kann in einer Aktivität 113 ebenfalls wieder ausgewählt werden.

Im Falle des Nicht-Detektierens der an die Server-Telefonnummer gerichteten Sprachruf-Aufbauanfrage kann die Verfahrensdurchführung wiederholt werden (ohne Wiederholung der Installation der Anwendungssoftware oder des Downloads der Anwendungssoftware).

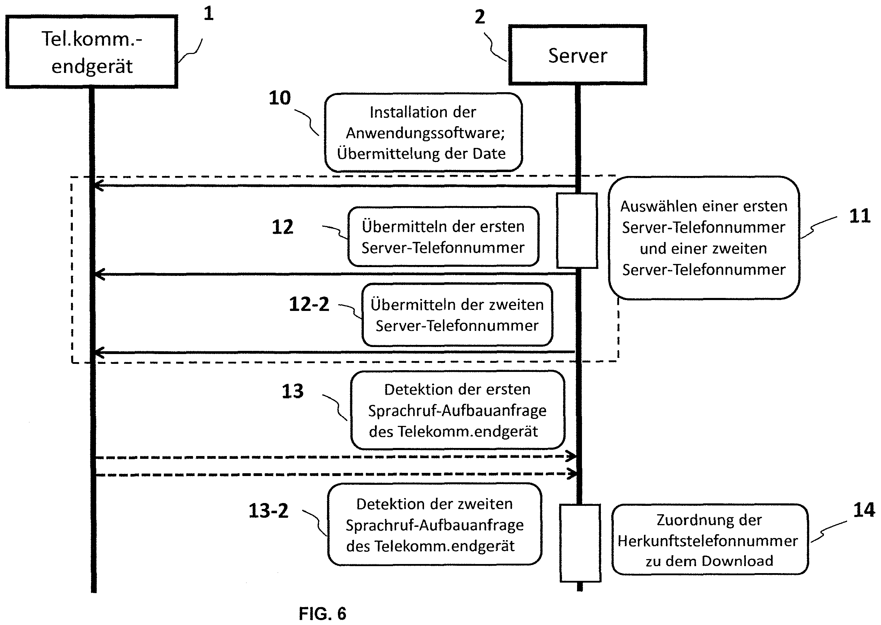

Um die Zuordnung der Date zu der Herkunftstelefonnummer gegenüber zufälligen Fehlzuordnungen oder Manipulationsversuchen sicherer zu machen, wird bei der Ausführungsform von Fig. 6 eine zweite Server-Telefonnummer übermittelt. In dieser Ausführungsform umfasst das Verfahren in den Aktivitäten 11 und 12-2 das Auswählen einer zweiten Server-Telefonnummer zum Zwecke der durchzuführenden Zuordnung aus einer Menge von mehreren möglichen Server-Telefonnummern sowie das Übermitteln der zweiten Server-Telefonnummer an das Telekommunikationsendgerät 1 über Datenkommunikation, nicht aber auf dem Wege eines Anrufs an das Telekommunikationsendgerät 1, wobei das Übermitteln im Rahmen der Installation der Anwendungssoftware auf dem Telekommunikationsendgerät oder mit dem Download der Anwendungssoftware erfolgt. Das Verfahren umfasst weiter das Detektieren einer vom Telekommunikationsendgerät 1 an die zweite Server-Telefonnummer gerichteten Sprachruf-Aufbauanfrage, wobei die Herkunftstelefonnummer mit der Sprachruf-Aufbauanfrage übermittelt wird sowie das Zuordnen der mit der Sprachruf-Aufbauanfrage übermittelten Herkunftstelefonnummer zu der wenigstens einen Date.

Im Sequenzdiagramm dieser Ausführungsform gemäß FIG. 6 sind im Vergleich zu FIG. 3 zusätzliche Aktivitäten hinsichtlich des Auswählens und der Übermittelung einer zweiten Server-Telefonnummer gezeigt. Weitere Ausführungen, die oben im Zusammenhang mit den Figuren 1-5, und insbesondere mit Figur 3 gemacht wurden, treffen auch auf die Ausführungsform von Figur 6 zu.

Die zweite Server-Telefonnummer ist von der ersten Server-Telefonnummer verschieden. In Aktivität 11 wird zusätzlich zu der ersten Server-Telefonnummer die zweite Server-Telefonnummer ausgewählt. Analog zur (ersten) Server-Telefonnummer kann die zweite Server-Telefonnummer aus einer Menge von mehreren möglichen Server-Telefonnummern ausgewählt werden. Diese Menge kann ebenfalls aus einer festen Anzahl fest vorgegebener Telefonnummern bestehen, welche dem Server 2 zugeordnet sind. Bei der Bildung der einzelnen Telefonnummern für die Menge kann, wie im Falle der (ersten) Server-Telefonnummer, analog zur Bildung von Telefonnummern für größere Organisationen, welche aus einer Vielzahl von Organisationseinheiten bestehen, verfahren werden. So kann etwa die Nummernfolge "01234" für den Server selbst, welcher dann analog zur Organisation selbst gesehen wird, vergeben werden und anschließend beispielsweise eine Nummer analog zu einer Organisationseinheit. Letztgenannte Nummer kann etwa aus einer aufsteigenden Nummernfolge beginnend bei "0000" und endend bei "9999", entnommen werden.

Bei 12 und 12-2 werden die die erste bzw. zweite Server-Telefonnummer an das Telekommunikationsendgerät 1 über Datenkommunikation übermittelt. Die Übermittelung geschieht dabei, wie bei Figur 3 ausgeführt, nicht auf dem Wege eines Anrufs an das Telekommunikationsendgerät 1, sondern das Übermitteln findet im Rahmen der Installation der Anwendungssoftware auf dem Telekommunikationsendgerät 1 statt oder erfolgt mit dem Download der Anwendungssoftware.

Bei 13 und 13-2 detektiert der Server 2 zwei vom Telekommunikationsendgerät 1 über das öffentliche Telefonnetz an die erste bzw. zweite Server-Telefonnummer gerichtete Sprachruf-Aufbauanfragen, wobei jeweils die Herkunftstelefonnummer mit der ersten bzw. zweiten Sprachruf-Aufbauanfrage übermittelt wird.

Bei 14 verifiziert der Server 2, ob hinsichtlich der beiden Herkunftstelefonnummern Konsistenz gegeben ist, d.h. ob die mit den beiden Sprachanruf-Aufbauanfragen übermittelten Herkunftstelefonnummern identisch sind. Bei positivem Ausgang dieser Konsistenzprüfung ordnet der Server 2 die mit den beiden Sprachruf-Aufbauanfragen übermittelte Herkunftstelefonnummer der wenigstens einen Date zu, also beispielsweise der International Mobile Station Equipment Identity (IMEI) des Telekommunikationsendgerätes 1 oder der auf der SIM-Karte eines Telekommunikationsendgerätes 1 gespeicherte International Mobile Subscriber Identity (IMSI). Die Zuordnung kann auch beispielsweise zu der laufenden Nummer erfolgen, die bei einem jeweiligen Download der Anwendungssoftware erzeugt wird oder die für eine laufende Kopie der Anwendungssoftware vergeben wird.

In einer Ausgestaltung dieser Ausführungsform kann auch das Setzen eines Zeitfensters bei der Übermittelung von zwei Server-Telefonnummern umfasst sein. In dieser Ausführungsform umfasst das erfindungsgemäße Verfahren das Setzen eines oder zweier Zeitfenster durch den Server.

Weitere Ausführungen, die oben im Zusammenhang mit den Figuren 1-6 gemacht wurden, treffen auch auf diese Ausführungsform mit zwei anzurufenden Server-Telefonnummern und Zeitfenster(n) zu.

Bei einer Variante wird ein gemeinsames Zeitfenster nach dem Übermitteln der beiden Server-Telefonnummern an das Telekommunikationsendgerät 1, innerhalb dessen der Server für das Detektieren der vom Telekommunikationsendgerät 1 an die beiden Server-Telefonnummern gerichteten Sprachruf-Aufbauanfragen bereit ist, und wobei das Setzen des Zeitfensters das Setzen eines Zeitpunktes, ab dem das Zeitfenster zu laufen beginnt und das Setzen einer Dauer für das Laufen des Zeitfensters, oder das Setzen eines Endzeitpunkts umfasst.

Bei einer anderen Variante werden zwei gesonderte Zeitfenster nach dem Übermitteln der jeweiligen Server-Telefonnummer an das Telekommunikationsendgerät 1 gesetzt, innerhalb deren der Server für das Detektieren der vom Telekommunikationsendgerät 1 an die erste bzw. zweite Server-Telefonnummer gerichtete Sprachruf-Aufbauanfrage bereit ist, und wobei das Setzen des jeweiligen Zeitfensters das Setzen eines Zeitpunktes, ab dem das jeweilige Zeitfenster zu laufen beginnt und das Setzen einer Dauer für das Laufen des jeweiligen Zeitfensters, oder das Setzen eines Endzeitpunkts für das jeweilige Zeitfenster umfasst.

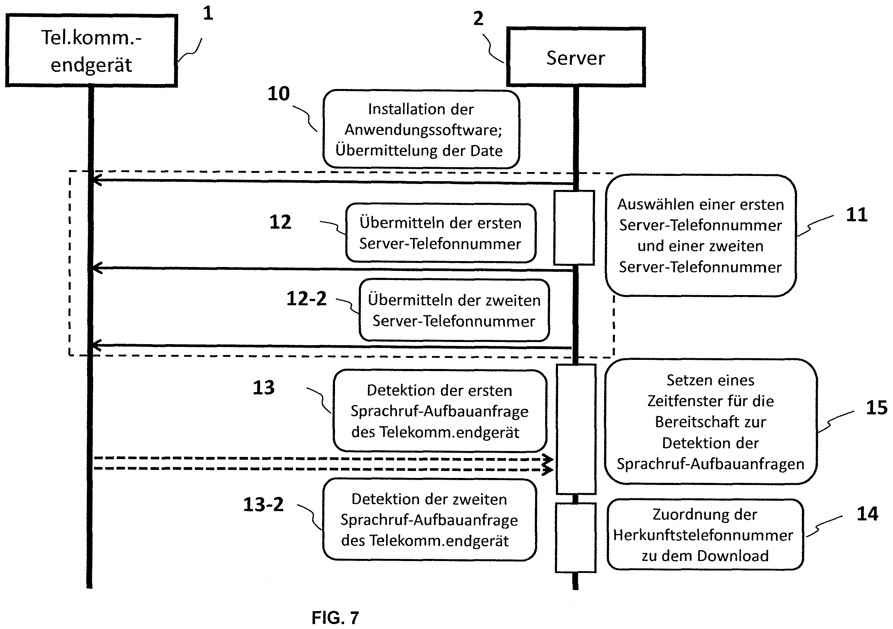

Im Sequenzdiagramm von FIG. 7 ist die Variante mit einem gemeinsamen Zeitfenster veranschaulicht. Das Setzen des Zeitfensters erfolgt in 15. Anlog wie zu dem vorgenannten Ausführungsformen kann die Dauer des Zeitfensters aus einer Gauß-Verteilung über diejenigen Zeiträume ermittelt werden, welche sich in der Vergangenheit zwischen dem Übermitteln der Server-Telefonnummern und den darauf folgenden Rufaufbauanfragen seitens der Telekommunikationsendgeräte 1 ergeben haben.

Das Setzen des Startpunktes für das Zeitfenster kann beispielsweise nach dem Übermitteln der zweiten Server-Telefonnummer in Aktivität 12-2 der FIG. 7 erfolgen.

Der Startpunkt und die Dauer für das Zeitfenster, oder der Endzeitpunkt, können bei der Übermittelung der beiden Server-Telefonnummern an das Telekommunikationsendgerät 1 übermittelt werden. Die Ausführungsform umfasst hierbei zusätzlich das Setzen eines Zeitfensters durch den Server nach dem Übermitteln der Server-Telefonnummer oder der zweiten Server-Telefonnummer an das Telekommunikationsendgerät 1, innerhalb dessen der Server für das Detektieren der vom Telekommunikationsendgerät 1 an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters umfasst und Übermitteln des Zeitpunktes und der Dauer an das Telekommunikationsendgerät, wobei das Übermitteln des Zeitpunktes und der Dauer im Rahmen der Installation der Anwendungssoftware auf dem Telekommunikationsendgerät 1 oder mit dem Download der Anwendungssoftware erfolgt.

In FIG. 8 ist ein entsprechendes Sequenzdiagramm gezeigt, bei dem auch im Telekommunikations-Endgerät 1 ein oder zwei Zeitfenster für ein rechtzeitiges Absetzen der Sprachruf-Aufbauanfragen sorgen. Analog zu den Ausführungsformen, in welchen nur eine Server-Telefonnummer an das Telekommunikationsendgerät 1 übermittelt wird, wird in Aktivität 16 das Zeitfenster beim Telekommunikationsendgerät 1 gesetzt, wobei das Übermitteln des Zeitpunktes und der Dauer für das Zeitfenster im Rahmen der Installation der Anwendungssoftware auf dem Telekommunikationsendgerät 1 oder mit dem Download der Anwendungssoftware erfolgt. In dieser Ausführungsform bestimmt das Zeitfenster somit nicht nur den Startpunkt und die Dauer für die Bereitschaft der Servers 2 für die Detektion der Sprachruf-Aufbauanfrage an die (erste) Server-Telefonnummer und die zweite Server-Telefonnummer, sondern der Startpunkt und die Dauer bestimmen auch ein Zeitfenster für das Telekommunikationsendgerät 1, eine Sprachruf-Aufbauanfrage an die erste Server-Telefonnummer und die zweite Server-Telefonnummer durchzuführen.

Vorteilhaft entspricht auch in dieser Ausführungsform der Startpunkt für das Zeitfenster beim Telekommunikationsendgerät 1 dem Startpunkt für das Zeitfenster beim Server 2. Wird also für den Startpunkt für das Zeitfenster beim Server, wie vorstehend ausgeführt, der Zeitpunkt für das Übermitteln der zweiten Server-Telefonnummer durch den Server 2 an das Telekommunikationsendgerät 1 gewählt, so wird als Startpunkt für das Zeitfenster beim Telekommunikationsendgerät 1 der Zeitpunkt des Empfangs der zweiten Server-Telefonnummer gewählt, der sich in der Regel nur unwesentlich vom Zeitpunkt des Übermittelns der zweiten Server-Telefonnummer unterscheidet.

Auch beim Telekommunikationsendgerät 1 wird bei einer Variante ein gemeinsames Zeitfenster für das Absetzen der beiden Sprachruf-Aufbauanfragen gesetzt, bei einer anderen Variante hingegen zwei gesonderte Zeitfenster für die jeweiligen Sprachruf-Aufbauanfragen.

In einer weiteren Ausführungsform des Verfahrens kann auch die zweite Server-Telefonnummer analog zur ersten Server-Telefonnummer erneut ausgewählt werden, damit diese nach dem Abschluss des erfindungsgemäßen Verfahrens wieder zu Verfügung stehen. Das Verfahren umfasst in dieser Ausführungsform zusätzlich das Ermöglichen der erneuten Auswahl der ersten Server-Telefonnummer und zweiten Server-Telefonnummer durch den Server, nachdem das Zeitfenster abgelaufen ist, unabhängig davon, ob die übermittelte Herkunftstelefonnummer zu der wenigstens einen Date zugeordnet worden ist, oder das Ermöglichen der erneuten Auswahl der ersten Server-Telefonnummer und der zweiten Server-Telefonnummer durch den Server, nachdem die übermittelte Herkunftstelefonnummer zu der wenigstens einen Date zugeordnet worden ist, unabhängig davon, ob das Zeitfenster bereits abgelaufen ist.

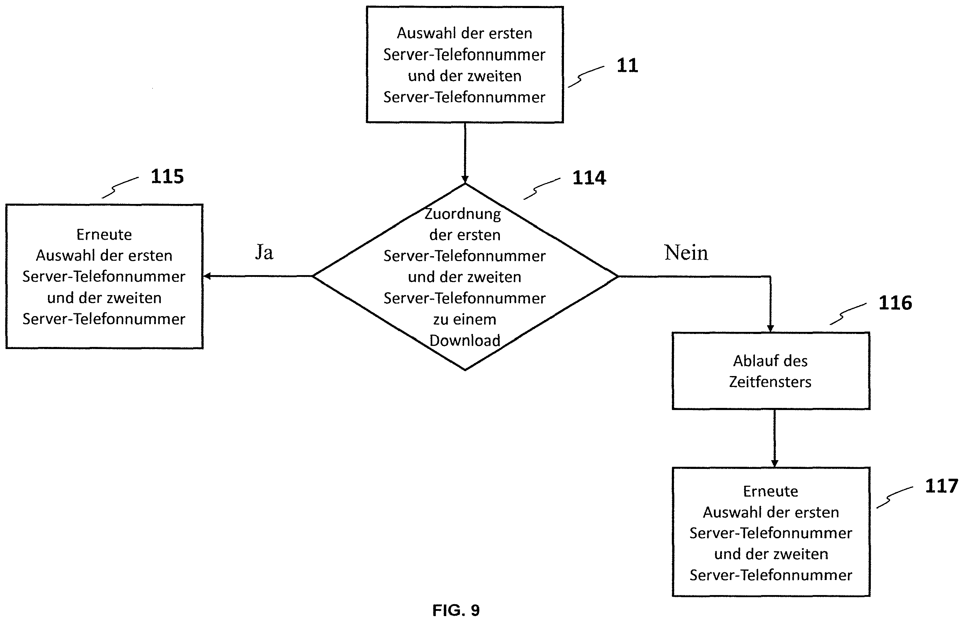

In FIG. 9 ist in einen Ablaufdiagramm gezeugt, nach welchen möglichen Situationen im Verfahren es zu einer erneuten Auswahl der bereits in Aktivität ausgewählten (ersten) Server-Telefonnummer und zweiten Server-Telefonnummer kommen kann. Konnte im Rahmen des erfindungsgemäßen Verfahrens eine Zuordnung der Herkunftstelefonnummer zu der Date erfolgen (Beantwortung der Abfrage 114 in FIG. 5 mit ‚ja"), so haben die in Aktivität 11 ausgewählte erste Server-Telefonnummer und die zweite Server-telefonnummer ihren Zweck erfüllt, sind somit wieder frei verfügbar und können in einer Aktivität 115 wieder ausgewählt werden. War es hingegen nicht möglich, die Herkunftstelefonnummer der Date zuzuordnen (Beantwortung der Abfrage 114 in FIG. 5 mit "nein"), so sind nach Ablauf des Zeitfensters 116 die erste Server-Telefonnummer und die zweite Server-Telefonnummer ebenfalls wieder frei und können in einer Aktivität 117 ebenfalls wieder ausgewählt werden.

Analog zu den Ausführungsformen, bei welchen nur eine (erste) Server-Telefonnummer übermittelt wird, wird in einer weiteren Ausführungsform des erfindungsgemäßen Verfahrens das Verfahren im Falle des Nicht-Detektierens der an die (erste) Server-Telefonnummer und an die zweite Server-Telefonnummer gerichteten Sprachruf-Aufbauanfragen wiederholt, wobei die Installation der Anwendungssoftware oder der Download der Anwendungssoftware nicht wiederholt wird.

In weiteren Ausführungsformen kann das erfindungsgemäße Verfahren weiter umfassen, dass das Setzen des Zeitfensters wie in der Aktivität 16 in FIG. 4 und 8 gezeigt, zusätzlich das Setzens einer zusätzlichen Dauer, innerhalb deren das Telekommunikationsgerät 1 nach dem Ablaufen des Zeitfensters keine neue Sprachruf-Aufbauanfrage an die Server-Telefonnummer und/oder die zweite Server-Telefonnummer absetzt umfasst. Damit kann beispielsweise dem Server 2 Zeit gegeben werden, etwa im Falle einer fehlgeschlagenen Zuordnung der Herkunftstelefonnummer zu der Date die Wiederholung oder Erstausführung eines der erfindungsgemäßen Verfahren einzuleiten.

Zur Übermittlung der Herkunftstelefonnummer mit einer Sprachanruf-Aufbauanfrage ist es i.a. nicht nötig, der Aufbauanfrage zu entsprechen und den Sprachanruf tatsächlich aufzubauen. Die Übermittlung der Herkunftstelefonnummer erfolgt vielmehr bereits bei mit der Weiterleitung der Aufbauanfrage an den Server. Es findet daher kein Rufaufbau statt. Das erfindungsgemäße Verfahren umfasst daher einen Nichtaufbau des Rufes durch den Server 2 im Rahmen des Detektierens der Sprachruf-Aufbauanfrage(n), wie in Aktivität 12 in den FIG. 2, 3, 4, 6, 7, und 8 gezeigt ist. Dies ermöglicht es für den Nutzer, der eine Anwendungssoftware auf seinem Telekommunikationsendgerät 1 installieren möchte, keine Verbindungsgebühren im Rahmen des Verfahrens anfallen.

In einer weiteren Ausführungsform ist, durch die Installation der Anwendungssoftware oder den Download der Anwendungssoftware durch das Telekommunikationsendgerät 1, ein Datenkommunikationsdialog mit dem Server 2 umfasst, in welchem das Telekommunikationsendgerät 1 eine Benutzeridentifikation an den Server 2 übermittelt, wobei die Benutzeridentifikation von der wenigstens einen Date umfasst wird und wobei das Zuordnen der Herkunftstelefonnummer zu der wenigstens einen Date eine Verifikation der Benutzeridentifikation umfasst. Damit können neben der Zuordnung der Herkunftstelefonnummer zu der Date zusätzliche Schritte zur Verifikation der Benutzeridentität durchgeführt werden.

Die vorgenannten Verfahren können gänzlich automatisiert ablaufen, so dass in keinem Stadium eine Interaktion des Benutzers mit dem Telekommunikationsendgerät 1 erforderlich ist.

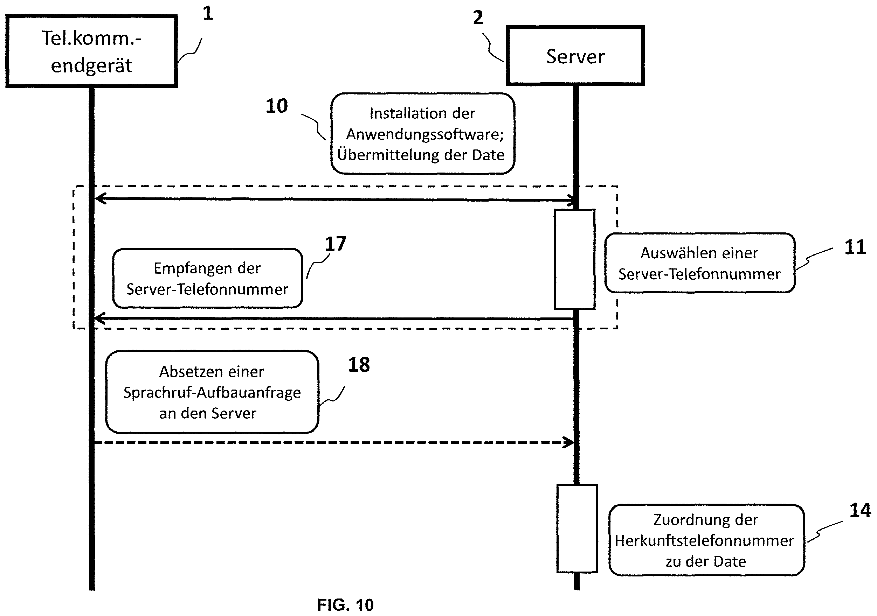

Die bisherigen Sequenzdiagramme veranschaulichen das Verfahren aus der Perspektive des Servers 2. Das Sequenzdiagramm von FIG. 10 zeigt nun das in Figur 2 dargestellte Basisbeispiel aus der Perspektive des Telekommunikationsendgeräts 1. Es beinhaltet in einer Aktivität 17 das Empfangen einer vom Server 2 übermittelten Server-Telefonnummer durch das Telekommunikationsendgerät 1. Weiter umfasst ist in einer Aktivität 18 das Absetzen einer an die Server-Telefonnummer gerichteten Sprachruf-Aufbauanfrage durch das Telekommunikationsendgerät 1. wobei die Herkunftstelefonnummer mit der Sprachruf-Aufbauanfrage übermittelt wird und wobei Rufnummernübermittlung zumindest für das Absetzen der beiden Sprachanruf-Aufbauanfragen aktiviert ist. Die Aktivierung der Rufnummernübermittlung für das Absetzen der beiden Sprachanruf-Aufbauanfragen erfolgt durch die Anwendungssoftware, und ermöglicht dem Server 2 die Ermittlung der Herkunftstelefonnummer im Rahmen der Detektion der vom Telekommunikationsendgerät 1 abgesetzten Sprachruf-Aufbauanfrage (Aktivität 13 in FIG. 2, 3, 4, 6, 7, und 8).

In FIG 11 ist die Variante von Figur 4 aus der Perspektive des Telekommunikationsendgeräts dargestellt. Sie umfasst das in der Aktivität 18 ausgeführte Absetzen einer an eine Server-Telefonnummer gerichteten Sprachruf-Aufbauanfrage durch das Telekommunikationsendgerät 1 das Absetzen der Sprachruf-Aufbauanfrage innerhalb eines Zeitfensters 19, das einen vom dem Server an das Telekommunikationsendgerät 1 übermittelten Zeitpunkt, ab dem das Zeitfenster zu laufen beginnt und eine von dem Server an das Telekommunikationsendgerät 1 übermittelte Dauer für das Laufen des Zeitfensters, umfasst. Zu Bestimmung des Zeitpunktes und der Dauer des Zeitfensters sei auf die entsprechenden Ausführungen in den obigen Abschnitten verwiesen.

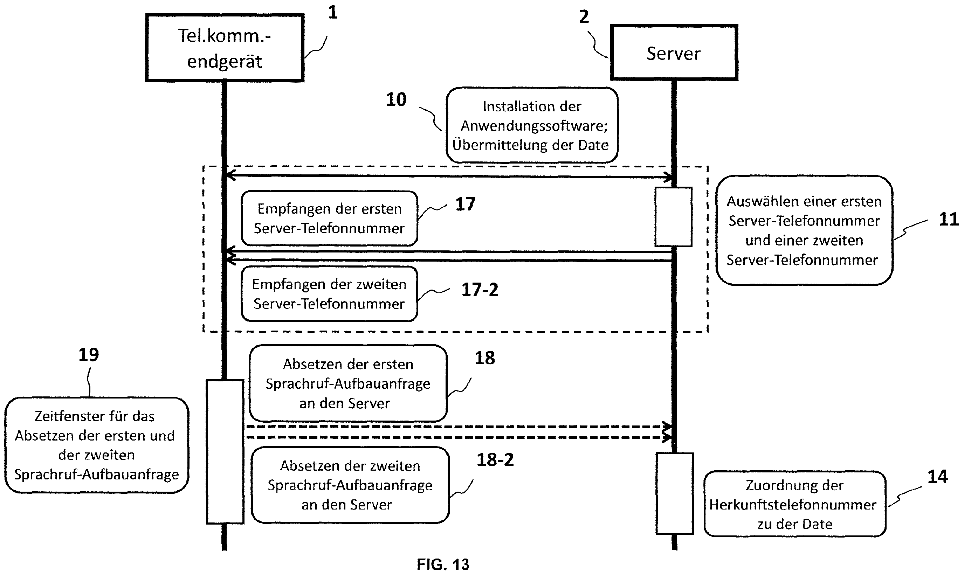

Entsprechend sind in dieser Beschreibung auch die endgerätseitigen Gegenstücke der auf die Serverseite bezogenen Verfahren von Figur 6 und Figur 8 enthalten. Diese enthalten gegenüber den Figuren 10 und 11 als zusätzliche Aktivität nur, dass das Telekommunikations-Endgerät jeweils eine Sprachanruf-Aufbauanfrage an die beiden verschiedenen Server-Telefonnummern richtet, mit denen dieses dem Server 2 jeweils seine Herkunftstelefonnummer mitteilt. In Figur 12 sind der endgeräteseitige Empfang der zweiten Server-Telefonnummer in Aktivität 17-2 sowie das endgeräteseitige Absetzen einer an die zweite Server-Telefonnummer gerichteten Sprachruf-Aufbauanfrage in Aktivität 18-2 dargestellt. Entsprechend zeigt Figur 13 eine Variante ähnlich dem Beispiel von Figur 10 mit einer zweiten Server-Telefonnummer.

Um die Übermittlung der Herkunftstelefonnummer sicherzustellen, ist es vorteilhaft, dass die Anwendungssoftware die Rufnummernübermittlung beim Telekommunikationsendgerät 1 zumindest für das Absetzen der beiden Sprachanruf-Aufbauanfragen aktiviert.

Ein Computerprogramm, das beispielsweise in einem nicht-volatilen Speicher im Telekommunikationsendgerät 1 gespeichert ist, enthält Anweisungen zum Ausführen einer oder mehrerer der beschriebenen Varianten des Verfahrens zum Ermitteln einer Herkunftstelefonnummer des Telekommunikationsendgeräts 1, wenn es auf dem Telekommunikationsendgerät 1 ausgeführt wird. Das Verfahren umfasst das Lesen einer von einem Server übermittelten (ersten) Server-Telefonnummer und - bei Ausführungsformen mit zwei Anruf-Aufbauanfragen - einer zweiten Server-Telefonnummer, sowie das Absetzen der an die (erste) Server-Telefonnummer gerichteten ersten Sprachruf-Aufbauanfrage und gegebenenfalls das Absetzen der an die zweite Server-Telefonnummer gerichteten zweiten Sprachruf-Aufbauanfrage, wobei die erste bzw. die gegebenenfalls vorhandene zweite Herkunftstelefonnummer mit der ersten bzw. zweiten Sprachruf-Aufbauanfrage übermittelt wird und wobei Rufnummernübermittelung aktiviert ist. Bei einer Variante sorgt das Computerprogramm beispielsweise dafür, dass das Absetzen der Sprachruf-Aufbauanfrage bzw. der Sprachruf-Aufbauanfragen innerhalb eines Zeitfensters erfolgt, das einen vom dem Server 2 an das Telekommunikationsendgerät 1 übermittelten Zeitpunkt, ab dem das Zeitfenster zu laufen beginnt und eine von dem Server an das Telekommunikationsendgerät übermittelte Dauer für das Laufen des Zeitfensters, oder einen Zeitendpunkt umfasst.

**Patentansprüche**

1. Verfahren zum Ermitteln einer Herkunftstelefonnummer eines Telekommunikationsendgeräts (1) und deren Zuordnung zu wenigstens einer Date, die im Rahmen einer Installation einer Anwendungssoftware auf dem Telekommunikationsendgerät an den Server übermittelt wird oder mit einem Download der Anwendungssoftware verknüpft ist oder in der downgeloadeten Anwendungssoftware enthalten ist, durch einen Server (2), umfassend:

   - Auswählen einer Server-Telefonnummer zum Zwecke der durchzuführenden Zuordnung aus einer Menge von mehreren möglichen Server-Telefonnummern;
   - Übermitteln der Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
   - Detektieren einer vom Telekommunikationsendgerät an die Server-Telefonnummer gerichteten Sprachruf-Aufbauanfrage, wobei die Herkunftstelefonnummer mit der Sprachruf-Aufbauanfrage übermittelt wird;
   - Zuordnen der mit der Sprachruf-Aufbauanfrage übermittelten Herkunftstelefonnummer zu der wenigstens einen Date;

   wobei der Sprachanruf-Aufbauanfrage nicht entsprochen wird und kein Rufaufbau erfolgt.

2. Verfahren nach Anspruch 1, wobei das Verfahren weiter umfasst:

   - Setzen eines Zeitfensters durch den Server nach dem Übermitteln der Server-Telefonnummer an das Telekommunikationsendgerät, innerhalb dessen der Server für das Detektieren der vom Telekommunikationsendgerät an die Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst oder
   - Setzen eines Zeitfensters durch den Server nach dem Übermitteln der Server-Telefonnummer an das Telekommunikationsendgerät, innerhalb dessen der Server für das Detektieren der vom Telekommunikationsendgerät an die Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst und Übermitteln des Zeitpunktes und der Dauer bzw. des Zeitendpunkts bzw. des Zeitendpunkts an das Telekommunikationsendgerät, wobei das Übermitteln des Zeitpunktes und der Dauer bzw. des Zeitendpunkts im Rahmen der Installation der Anwendungssoftware auf dem Telekommunikationsendgerät oder mit dem Download der Anwendungssoftware erfolgt.

3. Verfahren nach Anspruch 1 oder 2, wobei das Verfahren weiter umfasst:

- Ermöglichen der erneuten Auswahl der Server-Telefonnummer durch den Server, nachdem das Zeitfenster abgelaufen ist unabhängig davon, ob die übermittelte Herkunftstelefonnummer zu der wenigstens einen Date zugeordnet worden ist, oder
- Ermöglichen der erneuten Auswahl der Server-Telefonnummer durch den Server, nachdem die übermittelte Herkunftstelefonnummer der wenigstens einen Date zugeordnet worden ist unabhängig davon, ob das Zeitfenster bereits abgelaufen ist.

4. Verfahren nach einem der Ansprüche 1 bis 3, wobei das Verfahren im Falle des Nicht-Detektierens der an die Server-Telefonnummer gerichteten Sprachruf-Aufbauanfrage wiederholt wird, wobei die Installation der Anwendungssoftware oder der Download der Anwendungssoftware nicht wiederholt wird.

5. Verfahren nach Anspruch 1, wobei das Verfahren weiter umfasst:

- Auswählen einer zweiten Server-Telefonnummer zum Zwecke der durchzuführenden Zuordnung aus einer Menge von mehreren möglichen Server-Telefonnummern;
- Übermitteln der zweiten Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
- Detektieren einer vom Telekommunikationsendgerät an die zweite Server-Telefonnummer gerichteten Sprachruf-Aufbauanfrage, wobei die Herkunftstelefonnummer mit der Sprachruf-Aufbauanfrage übermittelt wird;
- Verifizieren, ob die die mit den beiden Sprachanruf-Aufbauanfragen übermittelten Herkunftstelefonnummern identisch sind;
- bei positivem Ausgang der Verifizierung, Zuordnen der mit der Sprachruf-Aufbauanfrage übermittelten Herkunftstelefonnummer zu der wenigstens einen Date,

wobei auch der zweiten Sprachanruf-Aufbauanfrage nicht entsprochen wird und kein Rufaufbau erfolgt.

6. Verfahren nach Anspruch 5, wobei das Verfahren weiter umfasst:

- Setzen eines Zeitfensters durch den Server nach dem Übermitteln der Server-Telefonnummer oder der zweiten Server-Telefonnummer an das Telekommunikationsendgerät, innerhalb dessen der Server für das Detektieren der vom Telekommunikationsendgerät an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst oder
- Setzen eines Zeitfensters durch den Server nach dem Übermitteln der Server-Telefonnummer oder der zweiten Server-Telefonnummer an das Telekommunikationsendgerät, innerhalb dessen der Server für das Detektieren der vom Telekommunikationsendgerät an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst und Übermitteln des Zeitpunktes und der Dauer bzw. des Zeitendpunkts an das Telekommunikationsendgerät, wobei das Übermitteln des Zeitpunktes und der Dauer bzw. des Zeitendpunkts im Rahmen der Installation der Anwendungssoftware auf dem Telekommunikationsendgerät oder mit dem Download der Anwendungssoftware erfolgt.

7. Verfahren nach Anspruch 5 oder 6, wobei das Verfahren weiter umfasst:

- Ermöglichen der erneuten Auswahl der Server-Telefonnummer und zweiten Server-Telefonnummer durch den Server, nachdem das Zeitfenster abgelaufen ist unabhängig davon, ob die übermittelte Herkunftstelefonnummer zu der wenigstens einen Date zugeordnet worden ist, oder

- Ermöglichen der erneuten Auswahl der Server-Telefonnummer und der zweiten Server-Telefonnummer durch den Server, nachdem die übermittelte Herkunftstelefonnummer zu der wenigstens einen Date zugeordnet worden ist unabhängig davon, ob das Zeitfenster bereits abgelaufen ist.

8. Verfahren nach einem der Ansprüche 5 bis 7, wobei das Verfahren im Falle des Nicht-Detektierens der an die Server-Telefonnummer gerichteten Sprachruf-Aufbauanfrage und der an die zweite Server-Telefonnummer gerichteten Sprachruf-Aufbauanfrage wiederholt wird, wobei die Installation der Anwendungssoftware oder der Download der Anwendungssoftware nicht wiederholt wird.

9. Verfahren nach einen der Ansprüche 5 bis 8, wobei dem Verfahren ein zusätzliches Verfahren nach den Ansprüchen 1 bis 4 vorangestellt oder nachgestellt wird.

10. Verfahren nach einem der Ansprüche 1 bis 9, weiter umfassend:

- Umfassen, durch das Setzen des Zeitfensters, des Setzens einer zusätzlichen Dauer, innerhalb deren das Telekommunikationsendgerät nach dem Ablaufen des Zeitfensters keine neue Sprachruf-Aufbauanfrage an die Server-Telefonnummer und/oder die zweite Server-Telefonnummer absetzt; und/oder
- Umfassen, durch die Installation der Anwendungssoftware oder den Download der Anwendungssoftware durch das Telekommunikationsendgerät, eines Datenkommunikationsdialoges mit dem Server, in welchem das Telekommunikationsendgerät eine Benutzeridentifikation an den Server übermittelt, wobei die Benutzeridentifikation von der wenigstens einen Date umfasst wird und wobei das Zuordnen der Herkunftstelefonnummer zu der wenigstens einen Date eine Verifikation der Benutzeridentifikation umfasst.

11. Verfahren zum Übermitteln einer Herkunftstelefonnummer eines Telekommunikationsendgeräts (1) an einen Server (2) und deren Zuordnung zu wenigstens einer im Rahmen einer Installation einer Anwendungssoftware auf dem Telekommunikationsendgerät an den Server übermittelten oder mit einem Download der Anwendungssoftware verknüpften oder in der downgeloadeten Anwendungssoftware enthaltenen Date, durch das Telekommunikationsendgerät, umfassend:

- Empfangen einer von einem Server im Rahmen der Installation der Anwendungssoftware auf dem Telekommunikationsendgerät oder mit dem Download der Anwendungssoftware und an das Telekommunikationsendgerät über Datenkommunikation, nicht aber auf dem Wege eines Anrufs an das Telekommunikationsendgerät übermittelten, durch den Server zum Zwecke der durchzuführenden Zuordnung aus einer Menge von mehreren möglichen Server-Telefonnummern ausgewählten Server-Telefonnummer;
- Absetzen einer an die Server-Telefonnummer gerichteten und von dem Server zu detektierenden Sprachruf-Aufbauanfrage, wobei die von dem Server wenigstens einer Date zuzuordnenden Herkunftstelefonnummer mit der Sprachruf-Aufbauanfrage übermittelt wird und wobei Rufnummernübermittlung aktiviert ist,

wobei der Sprachanruf-Aufbauanfrage nicht entsprochen wird und kein Rufaufbau erfolgt.

12. Verfahren nach Anspruch 11, außerdem umfassend:

- Empfangen einer von einem Server übermittelten zweiten Server-Telefonnummer;
- Absetzen einer an die zweite Server-Telefonnummer gerichteten zweiten Sprachruf-Aufbauanfrage, wobei die Herkunftstelefonnummer mit der Sprachruf-Aufbauanfrage übermittelt wird und Rufnummernübermittlung aktiviert ist.

13. Verfahren nach Anspruch 11 oder 12, wobei das Absetzen der an die Server-Telefonnummer bzw. Server-Telefonnummern gerichteten Sprachruf-Aufbauanfrage bzw. Sprachruf-Aufbauanfragen das Absetzen der Sprachruf-Aufbauanfrage bzw. Sprachruf-Aufbauanfragen innerhalb eines Zeitfensters umfasst, wobei das Zeitfenster einen vom dem Server an das Telekommunikationsendgerät übermittelten Zeitpunkt, ab dem das Zeitfenster zu laufen beginnt und eine von dem Server an das Telekommunikationsendgerät übermittelte Dauer für das Laufen des Zeitfensters, oder eines Zeitendpunkts umfasst.

14. Computerprogrammprodukt, umfassend Anweisungen, die auf einem computerlesbaren Speichermedium gespeichert sind, zum Ausführen eines Verfahrens zum Ermitteln einer Herkunftstelefonnummer eines Telekommunikationsendgeräts (1) an einen Server (2) und deren Zuordnung zu wenigstens einer im Rahmen einer Installation einer Anwendungssoftware auf dem Telekommunikationsendgerät an den Server übermittelten oder mit einem Download der Anwendungssoftware verknüpften oder in der downgeloadeten Anwendungssoftware enthaltenen Date, wenn das Computerprogramm auf dem Telekommunikationsendgerät ausgeführt wird, umfassend:

- Lesen einer von einem Server im Rahmen der Installation der Anwendungssoftware auf dem Telekommunikationsendgerät oder mit dem Download der Anwendungssoftware und an das Telekommunikationsendgerät über Datenkommunikation, nicht aber auf dem Wege eines Anrufs an das Telekommunikationsendgerät übermittelten, durch den Server zum Zwecke der durchzuführenden Zuordnung aus einer Menge von mehreren möglichen Server-Telefonnummern ausgewählten Server-Telefonnummer;
- Absetzen einer an die Server-Telefonnummer gerichteten und von dem Server zu detektierenden Sprachruf-Aufbauanfrage, wobei die von dem Server wenigstens einer Date zuzuordnenden Herkunftstelefonnummer mit der Sprachruf-Aufbauanfrage übermittelt wird und wobei Rufnummernübermittelung aktiviert ist, wobei der Sprachanruf-Aufbauanfrage nicht entsprochen wird und kein Rufaufbau erfolgt..

15. Computerprogrammprodukt nach Anspruch 14, wobei das vom Computerprogramm ausgeführte Verfahren außerdem umfasst:

- Empfangen einer von einem Server übermittelten zweiten Server-Telefonnummer;
- Absetzen einer an die zweite Server-Telefonnummer gerichteten zweiten Sprachruf-Aufbauanfrage, wobei die Herkunftstelefonnummer mit der Sprachruf-Aufbauanfrage übermittelt wird und Rufnummernübermittlung aktiviert ist.

16. Computerprogrammprodukt nach Anspruch 14 oder 15, wobei bei dem vom Computerprogramm ausgeführten Verfahren das Absetzen der an die Server-Telefonnummer bzw. Server-Telefonnummern gerichteten Sprachruf-Aufbauanfrage bzw. Sprachruf-Aufbauanfragen das Absetzen der Sprachruf-Aufbauanfrage bzw. Sprachruf-Aufbauanfragen innerhalb eines Zeitfensters umfasst, wobei das Zeitfenster einen vom dem Server an das Telekommunikationsendgerät übermittelten Zeitpunkt, ab dem das Zeitfenster zu laufen beginnt und eine von dem Server an das Telekommunikationsendgerät übermittelte Dauer für das Laufen des Zeitfensters, umfasst.

**Claims**

1. Method for determining an originating telephone number of a telecommunications terminal (1) and its association with at least one data which is transmitted to the server as part of an installation of an application software on the telecommunications terminal or is linked to a download of the application software or is contained in the downloaded application software, by a server (2), comprising

- selecting a server telephone number for the purpose of the association to be carried out from a set of several possible server telephone numbers;
- transmitting of the server telephone number to the telecommunications terminal device via data communication, but not by way of a call to the telecommunications terminal device, whereby the transmission takes place as part of the installation of the application software on the telecommunications terminal device or with the download of the application software;
- detecting a voice call set-up request sent by the telecommunications terminal to the server telephone number, whereby the originating telephone number is transmitted with the voice call set-up request;
- assigning of the originating telephone number transmitted with the voice call set-up request to at least one data;

whereby the voice call set-up request is not complied with and no call set-up takes place.

2. The method of claim 1, wherein the method further comprises:

- setting a time window by the server after transmitting the server telephone number to the telecommunication terminal, within which the server is ready for detecting the voice call set-up request addressed by the telecommunication terminal to the server telephone number, and wherein setting the time window comprises setting a time from which the time window starts to run and setting a duration for the running of the time window, or a time endpoint, or
- setting of a time window by the server after transmission of the server telephone number to the telecommunications terminal, within which the server is ready for detecting the voice call set-up request directed from the telecommunications terminal to the server telephone number, and wherein the setting of the time window comprises the setting of a time from which the time window begins to run and the setting of a duration for the running of the time window, or a time endpoint, and transmission of the time and the duration or the time endpoint or the time endpoint to the telecommunications terminal, wherein the transmission of the time and the duration or the time endpoint is carried out as part of the installation of the application software on the telecommunications terminal or as part of the installation of the application software on the telecommunications terminal or as part of the installation of the application software on the telecommunications terminal, the time endpoint or the time endpoint to the telecommunications terminal, whereby the transmission of the time and the duration or the time endpoint takes place as part of the installation of the application software on the telecommunications terminal or with the download of the application software.

3. The method of claim 1 or 2, wherein the method further comprises:

    - enabling the server to reselect the server phone number after the time window has expired regardless of whether the transmitted originating phone number has been assigned to the at least one data, or
    - enabling the server to reselect the server telephone number after the transmitted originating telephone number has been assigned to at least one data, regardless of whether the time window has already expired.

4. The method according to any one of claims 1 to 3, wherein the method is repeated in case of non-detection of the voice call setup request addressed to the server telephone number, wherein the installation of the application software or the download of the application software is not repeated.

5. The method of claim 1, wherein the method further comprises:

    - selecting a second server telephone number for the purpose of the association to be carried out from a set of several possible server telephone numbers;
    - transmitting of the second server telephone number to the telecommunications terminal via data communication, but not by means of a call to the telecommunications terminal, whereby the transmission takes place as part of the installation of the application software on the telecommunications terminal or with the download of the application software;
    - detecting a voice call set-up request sent by the telecommunications terminal to the second server telephone number, whereby the originating telephone number is transmitted with the voice call set-up request;
    - verifying that the source telephone numbers transmitted with the two voice call setup requests are identical;
    - if the verification is successful, assigning of the originating telephone number transmitted with the voice call set-up request to at least one data,

wherein the second voice call set-up request is also not complied with and the call is not set up.

6. The method of claim 5, wherein the method further comprises:

    - setting of a time window by the server after transmission of the server telephone number or the second server telephone number to the telecommunication terminal, within which the server is ready for detecting the voice call set-up request addressed by the telecommunication terminal to the server telephone number and to the second server telephone number, and wherein setting the time window comprises setting a time from which the time window starts to run and setting a duration for the running of the time window, or a time endpoint, or
    - setting of a time window by the server after transmission of the server telephone number or the second server telephone number to the telecommunications terminal, within which the server is ready for detecting the voice call set-up request sent by the telecommunications terminal to the server telephone number and to the second server telephone number, and wherein the setting of the time window comprises the setting of a point in time from which the time window begins to run and the setting of a duration for the running of the time window, or a time endpoint, and transmission of the point in time and duration or time endpoint, from which the time window begins to run and setting a duration for the running of the time window, or a time endpoint, and transmitting the time and the duration or the time endpoint to the telecommunication system. of the time end point to the telecommunications terminal, whereby the transmission of the time and the duration or the time end point takes place as part of the installation of the application software on the telecommunications terminal or with the download of the application software.

7. The method of claim 5 or 6, wherein the method further comprises:

    - enabling the server to reselect the server telephone number and second server telephone number after the time window has expired regardless of whether the transmitted originating telephone number has been assigned to the at least one data, or
    - enabling the server to reselect the server phone number and the second server phone number after the transmitted originating phone number has been assigned to the at least one data, regardless of whether the time window has already expired.

8. The method according to any one of claims 5 to 7, wherein the method is repeated in the case of non-detection of the voice call setup request directed to the server telephone number and the voice call setup request directed to the second server telephone number, wherein the installation of the application software or the download of the application software is not repeated.

9. The method according to any one of claims 5 to 8, wherein the method is preceded or followed by an additional method according to claims 1 to 4.

10. A method according to any one of claims 1 to 9, further comprising:

    - comprising, by setting the time window, setting an additional duration within which the telecommunication terminal does not send a new voice call set-up request to the server telephone number and/or the second server telephone number after the time window has expired; and/or
    - comprising, by installation of the application software or download of the application software by the telecommunication terminal, a data communication dialogue with the server in which the telecommunication terminal transmits a user identification to the server, wherein the user identification is comprised of the at least one datum and wherein assigning the originating telephone number to the at least one datum comprises verifying the user identification.

11. Method for transmitting an originating telephone number of a telecommunications terminal (1) to a server (2) and its association with at least one data, transmitted to the server as part of an installation of an application software on the telecommunications terminal or linked to a download of the application software or contained in the downloaded application software, by the telecommunications terminal:

    - receiving a server telephone number, transmitted from a server as part of the installation of the application software on the telecommunications terminal or with the download of the application software and to the telecommunications terminal via data communication, but not by way of a call to the telecommunications terminal, by the server for the purpose of the association to be carried out, selected selected from a set of several possible server telephone numbers;
    - sending a voice call set-up request directed to the server telephone number and to be detected by the server, whereby the least one originating telephone number to be assigned by the server to a data is transmitted with the voice call set-up request and whereby call number transmission is activated,

whereby the voice call set-up request is not complied with and no call set-up takes place.

12. The method of claim 11, further comprising:

    - receiving a second server telephone number transmitted by a server;
    - sending a second voice call set-up request to the second server telephone number, whereby the originating telephone number is transmitted with the voice call set-up request and call number transmission is activated.

13. The method according to claim 11 or 12, wherein sending the voice call set-up request or voice call set-up requests directed to the server telephone number or server telephone numbers comprises sending the voice call set-up request or voice call set-up requests within a time window, wherein the time window comprises a time transmitted from the server to the telecommunication terminal from which the time window starts to run and a duration transmitted from the server to the telecommunication terminal for the running of the time window, or a time endpoint.

14. A computer program product comprising instructions, stored on a computer readable storage medium, for carrying out a method for determining an originating telephone number of a telecommunications terminal (1) to a server (2) and its association with at least one data transmitted to the server as part of an installation of application software on the telecommunications terminal or associated with a download of the application software or contained in the downloaded application software when the computer program is executed on the telecommunications terminal, comprising: a method for determining an originating telephone number of a telecommunications terminal (1) to a server (2) and its association with at least one data transmitted to the server as part of an installation of application software on the telecommunications terminal or associated with a download of the application software or contained in the downloaded application software when the computer program is executed on the telecommunications terminal:

    - reading a server telephone number transmitted from a server as part of the installation of the application software on the telecommunications terminal or with the download of the application software and to the telecommunications terminal via data communication, but not by way of a call to the telecommunications terminal, selected by the server from a set of several possible server telephone numbers for the purpose of the association to be carried out;
- sending a voice call set-up request directed to the server telephone number and to be detected by the server, wherein the originating telephone number to be assigned by the server to at least one data is transmitted with the voice call set-up request and wherein call number transmission is activated, wherein the voice call set-up request is not complied with and no call set-up takes place.

15. The computer program product of claim 14, wherein the method performed by the computer program further comprises:

   - receiving a second server telephone number transmitted by a server;
   - sending a second voice call set-up request to the second server telephone number, whereby the originating telephone number is transmitted with the voice call set-up request and call number transmission is activated.

16. The computer program product according to claim 14 or 15, wherein in the method executed by the computer program, the sending of the voice call set-up request or voice call set-up requests directed to the server telephone number or server telephone numbers comprises sending the voice call set-up request or voice call set-up requests within a time window, the time window comprising a point in time transmitted from the server to the telecommunication terminal from which the time window starts to run and a time interval from the server to the telecommunication terminal from which the time window starts to run. The method comprises sending the voice call set-up request or voice call set-up requests directed to the server telephone number or server telephone numbers within a time window, wherein the time window comprises a time transmitted by the server to the telecommunications terminal from which the time window begins to run and a duration transmitted by the server to the telecommunications terminal for the running of the time window.

**Revendications**

1. Procédé pour déterminer un numéro de téléphone d'origine d'un terminal de télécommunication (1) et son association à au moins une date qui est transmis au serveur dans le cadre d'une installation d'un logiciel d'application sur le terminal de télécommunication ou qui est associé à un téléchargement du logiciel d'application ou qui est contenu dans le logiciel d'application téléchargé, par un serveur (2), comprenant:

   - sélecter d'un numéro de téléphone de serveur dans le but d'effectuer une attribution parmi un ensemble de plusieurs numéros de téléphone de serveur possibles ;
   - transmettre du numéro de téléphone du serveur au terminal de télécommunication par communication de données, mais non par voie d'appel au terminal de télécommunication, la transmission étant effectuée dans le cadre de l'installation du logiciel d'application sur le terminal de télécommunication ou avec le téléchargement du logiciel d'application ;
   - détecter une demande d'établissement d'appel vocal adressée par le terminal de télécommunication au numéro de téléphone serveur, dans lequel le numéro de téléphone d'origine est transmis avec la demande d'établissement d'appel vocal ;
   - associer le numéro de téléphone d'origine transmis avec la demande d'établissement d'appel vocal à l'au moins une date;

la demande d'établissement d'appel vocal n'étant pas satisfaite et l'appel n'étant pas établi.

2. Procédé selon la revendication 1, ledit procédé comprenant en outre :

   - le réglage par le serveur d'une fenêtre temporelle après la transmission du numéro de téléphone du serveur au terminal de télécommunication, dans laquelle le serveur est prêt à détecter la demande d'établissement d'appel vocal adressée par le terminal de télécommunication au numéro de téléphone du serveur, et dans lequel le réglage de la fenêtre temporelle comprend le réglage d'un moment à partir duquel la fenêtre temporelle commence à s'écouler et le réglage d'une durée pour l'écoulement de la fenêtre temporelle, ou d'un point de fin de temps, ou
   - le réglage par le serveur d'une fenêtre temporelle après la transmission du numéro de téléphone du serveur au terminal de télécommunication, dans laquelle le serveur est prêt à détecter la demande d'établissement d'appel vocal adressée par le terminal de télécommunication au numéro de téléphone du serveur, et dans laquelle la définition de la fenêtre temporelle comprend la définition d'un moment à partir duquel la fenêtre temporelle commence à s'écouler et la définition d'une durée pour l'écoulement de la fenêtre temporelle, ou d'un point de fin temporel, et la transmission du moment et de la durée, ou du point de fin temporel, au terminal de télécommunication pendant l'installation de l'application out du point de fin de temps ou du point de fin de temps au terminal de télécommunication, la transmission du moment et de la durée ou du point de fin de temps s'effectuant dans le cadre de l'installation du logiciel d'application sur le terminal de télécommunication ou avec le téléchargement du logiciel d'application.

3. Procédé selon la revendication 1 ou 2, ledit procédé comprenant en outre :

- permettre au serveur de sélectionner à nouveau le numéro de téléphone du serveur après l'expiration de la fenêtre temporelle, que le numéro de téléphone d'origine transmis ait été ou non associé à ladite au moins une date, ou
- permettre au serveur de sélectionner à nouveau le numéro de téléphone du serveur après que le numéro de téléphone d'origine transmis a été attribué à la au moins une date, que la fenêtre temporelle soit ou non déjà écoulée.

4. Procédé selon l'une quelconque des revendications 1 à 3, dans lequel le procédé est répété en cas de non-détection de la demande d'établissement d'appel vocal adressée au numéro de téléphone serveur, l'installation du logiciel d'application ou le téléchargement du logiciel d'application n'étant pas répété.

5. Procédé selon la revendication 1, ledit procédé comprenant en outre :

- sélectionner un deuxième numéro de téléphone de serveur dans le but d'effectuer l'association parmi un ensemble de plusieurs numéros de téléphone de serveur possibles ;
- tramettre du second numéro de téléphone de serveur au terminal de télécommunication par une communication de données, mais non par un appel au terminal de télécommunication, la transmission étant effectuée dans le cadre de l'installation du logiciel d'application sur le terminal de télécommunication ou avec le téléchargement du logiciel d'application ;
- détecter une demande d'établissement d'appel vocal adressée par le terminal de télécommunication au second numéro de téléphone serveur, le numéro de téléphone d'origine étant transmis avec la demande d'établissement d'appel vocal ;
- vérifier que les numéros de téléphone d'origine transmis avec les deux demandes d'établissement d'appel vocal sont identiques ;
- si l'issue de la vérification est positive, associer le numéro de téléphone d'origine transmis avec la demande d'établissement d'appel vocal à l'au moins une date,

la deuxième demande d'établissement d'appel vocal n'est pas non plus satisfaite et l'appel n'est pas établi.

6. Procédé selon la revendication 5, ledit procédé comprenant en outre :

- le réglage par le serveur d'une fenêtre temporelle après la transmission du numéro de téléphone de serveur ou du second numéro de téléphone de serveur au terminal de télécommunication, dans laquelle le serveur est prêt à détecter la demande d'établissement d'appel vocal adressée par le terminal de télécommunication au numéro de téléphone de serveur et au second numéro de téléphone de serveur, et dans laquelle l'établissement de la fenêtre temporelle comprend l'établissement d'un moment à partir duquel la fenêtre temporelle commence à s'écouler et l'établissement d'une durée pour l'écoulement de la fenêtre temporelle, ou d'un point de fin temporel, ou
- le réglage par le serveur d'une fenêtre temporelle après la transmission du numéro de téléphone du serveur ou du deuxième numéro de téléphone du serveur au terminal de télécommunication, dans laquelle le serveur est prêt à détecter la demande d'établissement d'appel vocal adressée par le terminal de télécommunication au numéro de téléphone du serveur et au deuxième numéro de téléphone du serveur, et dans laquelle le réglage de la fenêtre temporelle comprend le réglage d'un moment, à partir duquel la fenêtre de temps commence à s'écouler et le réglage d'une durée pour l'écoulement de la fenêtre de temps, ou d'un point de fin de temps, et la transmission du moment et de la durée ou du point de fin de temps, du point de fin de temps au terminal de télécommunication, la transmission de l'instant et de la durée ou du point de fin de temps s'effectuant dans le cadre de l'installation du logiciel d'application sur le terminal de télécommunication ou avec le téléchargement du logiciel d'application.

7. Procédé selon la revendication 5 ou 6, ledit procédé comprenant en outre :

- permettre au serveur de sélectionner à nouveau le numéro de téléphone du serveur et le deuxième numéro de téléphone du serveur après l'expiration de la fenêtre temporelle, que le numéro de téléphone d'origine transmis ait été ou non associé à l'au moins une date, ou
- permettre au serveur de sélectionner à nouveau le numéro de téléphone du serveur et le second numéro de téléphone du serveur après que le numéro de téléphone d'origine transmis a été associé à l'au moins une date, que la fenêtre temporelle se soit déjà écoulée ou non.

8. Procédé selon l'une quelconque des revendications 5 à 7, dans lequel le procédé est répété en cas de non-détection de la demande d'établissement d'appel vocal adressée au numéro de téléphone serveur et de la demande d'établissement d'appel vocal adressée au deuxième numéro de téléphone serveur, l'installation du logiciel d'application ou le téléchargement du logiciel d'application n'étant pas répété.

9. Procédé selon l'une des revendications 5 à 8, dans lequel le procédé est précédé ou suivi d'un procédé supplémentaire selon les revendications 1 à 4.

10. Procédé selon l'une quelconque des revendications 1 à 9, comprenant en outre :

   - comprenant, en définissant la fenêtre temporelle, la définition d'une durée supplémentaire pendant laquelle le terminal de télécommunication n'émet pas de nouvelle demande d'établissement d'appel vocal vers le numéro de téléphone serveur et/ou le second numéro de téléphone serveur après l'expiration de la fenêtre temporelle ; et/ou
   - comprenant, par l'installation du logiciel d'application ou le téléchargement du logiciel d'application par le terminal de télécommunication, un dialogue de communication de données avec le serveur dans lequel le terminal de télécommunication transmet un identifiant d'utilisateur au serveur, dans lequel l'identifiant d'utilisateur est compris par l'au moins une date et dans lequel l'association du numéro de téléphone d'origine à l'au moins un fichier comprend une vérification de l'identifiant d'utilisateur.

11. Procédé pour la transmission d'un numéro de téléphone d'origine d'un terminal de télécommunication (1) à un serveur (2) et son association à au moins une date, transmis au serveur dans le cadre d'une installation d'un logiciel d'application sur le terminal de télécommunication ou associé à un téléchargement du logiciel d'application ou contenu dans le logiciel d'application téléchargé, par le terminal de télécommunication, comprenant :

   - Réception d'un numéro de téléphone de serveur, transmis par un serveur dans le cadre de l'installation du logiciel d'application sur le terminal de télécommunication ou avec le téléchargement du logiciel d'application et transmis au terminal de télécommunication par une communication de données, mais pas par la voie d'un appel vers le terminal de télécommunication, dans le but d'une attribution à effectuer par le serveur, sélectionné parmi un ensemble de plusieurs numéros de téléphone de serveur possibles ;
   - l'émission d'une demande d'établissement d'appel vocal adressée au numéro de téléphone du serveur et à détecter par le serveur, le étant transmis par le serveur à au moins un numéro de téléphone d'origine à attribuer à l'au moins une date avec la demande d'établissement d'appel vocal, et la transmission du numéro d'appel étant activée,

la demande d'établissement d'appel vocal n'est pas satisfaite et l'appel n'est pas établi.

12. Procédé selon la revendication 11, comprenant en outre :

   - Réception d'un deuxième numéro de téléphone de serveur transmis par un serveur ;
   - l'envoi d'une deuxième demande d'établissement d'appel vocal adressée au deuxième numéro de téléphone de serveur, le numéro de téléphone d'origine étant transmis avec la demande d'établissement d'appel vocal et l'identification de la ligne appelante étant activée.

13. Procédé selon la revendication 11 ou 12, dans lequel l'émission de la demande d'établissement d'appel vocal ou des demandes d'établissement d'appel vocal adressées au(x) numéro(s) de téléphone serveur(s) comprend l'émission de la demande d'établissement d'appel vocal ou des demandes d'établissement d'appel vocal dans une fenêtre temporelle, la fenêtre temporelle comprenant un moment transmis par le serveur au terminal de télécommunication à partir duquel la fenêtre temporelle commence à s'écouler et une durée transmise par le serveur au terminal de télécommunication pour l'écoulement de la fenêtre temporelle, ou d'un point de fin de temps.

14. Produit de programme informatique comprenant des instructions stockées sur un support de stockage lisible par ordinateur pour exécuter un procédé pour déterminer un numéro de téléphone d'origine d'un terminal de télécommunication (1) à un serveur (2) et son association à au moins une date transmis au serveur dans le cadre d'une installation d'un logiciel d'application sur le terminal de télécommunication ou associé à un téléchargement du logiciel d'application ou contenu dans le logiciel d'application téléchargé, lorsque le programme informatique est exécuté sur le terminal de télécommunication, comprenant :

- lecture d'un numéro de téléphone de serveur transmis par un serveur dans le cadre de l'installation du logiciel d'application sur le terminal de télécommunication ou avec le téléchargement du logiciel d'application et au terminal de télécommunication par communication de données, mais pas par voie d'un appel vers le terminal de télécommunication, numéro de téléphone de serveur sélectionné par le serveur dans le but de l'association à effectuer parmi un ensemble de plusieurs numéros de téléphone de serveur possibles ;

- l'émission d'une demande d'établissement d'appel vocal adressée au numéro de téléphone du serveur et devant être détectée par le serveur, le numéro de téléphone d'origine devant être attribué par le serveur à au moins une date étant transmis avec la demande d'établissement d'appel vocal et la transmission du numéro d'appel étant activée, la demande d'établissement d'appel vocal n'étant pas satisfaite et aucun établissement d'appel n'ayant lieu.

15. Produit de programme d'ordinateur selon la revendication 14, dans lequel le procédé exécuté par le programme d'ordinateur comprend en outre :

- Réception d'un deuxième numéro de téléphone de serveur transmis par un serveur ;

- l'envoi d'une deuxième demande d'établissement d'appel vocal adressée au deuxième numéro de téléphone de serveur, le numéro de téléphone d'origine étant transmis avec la demande d'établissement d'appel vocal et l'identification de la ligne appelante étant activée.

16. Produit programme d'ordinateur selon la revendication 14 ou 15, dans lequel, dans le procédé exécuté par le programme d'ordinateur, l'émission de la ou des demandes d'établissement d'appel vocal adressées au(x) numéro(s) de téléphone serveur(s) comprend l'émission de la ou des demandes d'établissement d'appel vocal dans une période de temps, la fenêtre temporelle comprend un moment transmis par le serveur au terminal de télécommunication à partir duquel la fenêtre temporelle commence à s'écouler et une durée transmise par le serveur au terminal de télécommunication pour l'écoulement de la fenêtre temporelle.

EP 4 133 705 B1

FIG. 1

FIG. 2

Tel.komm.- endgerät 1

Server 2

10 Installation der Anwendungssoftware; Übermittelung der Date

11 Auswählen einer Server-Telefonnummer

12 Übermitteln der Server-Telefonnummer

15 Setzen eines Zeitfenster für die Bereitschaft zur Detektion einer Sprachruf-Aufbauanfrage

13 Sprachruf-Aufbauanfrage des Telekomm.endgerät

14 Zuordnung der Herkunftstelefonnummer zu der Date

FIG. 3

**1** Tel.komm.-endgerät

**2** Server

**10** Installation der Anwendungssoftware; Übermittelung der Date

**11** Auswählen einer Server-Telefonnummer

**12** Übermitteln der Server-Telefonnummer

**16** Setzen eines Zeitfenster für das Absetzen einer Sprachruf-Aufbauanfrage

**13** Sprachruf-Aufbauanfrage des Telekomm.endgerät

**15** Setzen eines Zeitfenster für die Bereitschaft zur Detektion einer Sprachruf-Aufbauanfrage

**14** Zuordnung der Herkunftstelefonnummer zu dem Download

FIG. 4

EP 4 133 705 B1

FIG. 5

EP 4 133 705 B1

**1** Tel.komm.-endgerät

**2** Server

**10** Installation der Anwendungssoftware; Übermittelung der Date

**11** Auswählen einer ersten Server-Telefonnummer und einer zweiten Server-Telefonnummer

**12** Übermitteln der ersten Server-Telefonnummer

**12-2** Übermitteln der zweiten Server-Telefonnummer

**13** Detektion der ersten Sprachruf-Aufbauanfrage des Telekomm.endgerät

**13-2** Detektion der zweiten Sprachruf-Aufbauanfrage des Telekomm.endgerät

**14** Zuordnung der Herkunftstelefonnummer zu dem Download

FIG. 6

EP 4 133 705 B1

**FIG. 7**

2 — Server

1 — Tel.komm.-endgerät

10 — Installation der Anwendungssoftware; Übermittelung der Date

11 — Auswählen einer ersten Server-Telefonnummer und einer zweiten Server-Telefonnummer

12 — Übermitteln der ersten Server-Telefonnummer

12-2 — Übermitteln der zweiten Server-Telefonnummer

15 — Setzen eines Zeitfenster für die Bereitschaft zur Detektion der Sprachruf-Aufbauanfragen

13 — Detektion der ersten Sprachruf-Aufbauanfrage des Telekomm.endgerät

13-2 — Detektion der zweiten Sprachruf-Aufbauanfrage des Telekomm.endgerät

14 — Zuordnung der Herkunftstelefonnummer zu dem Download

EP 4 133 705 B1

**1** Tel.komm.-endgerät

**2** Server

**10** Installation der Anwendungssoftware; Übermittelung der Date

**11** Auswählen einer ersten Server-Telefonnummer und einer zweiten Server-Telefonnummer

**12** Übermitteln der ersten Server-Telefonnummer

**12-2** Übermitteln der zweiten Server-Telefonnummer

**16** Setzen eines Zeitfenster für das Absetzen der Sprachruf-Aufbauanfragen

**13** Detektion der ersten Sprachruf-Aufbauanfrage des Telekomm.endgerät

**15** Setzen eines Zeitfenster für die Bereitschaft zur Detektion der Sprachruf-Aufbauanfragen

**13-2** Detektion der zweiten Sprachruf-Aufbauanfrage des Telekomm.endgerät

**14** Zuordnung der Herkunftstelefonnummer zu dem Download

FIG. 8

FIG. 9

**FIG. 10**

- **2** Server
- **1** Tel.komm.-endgerät
- **10** Installation der Anwendungssoftware; Übermittelung der Date
- **11** Auswählen einer Server-Telefonnummer
- **17** Empfangen der Server-Telefonnummer
- **18** Absetzen einer Sprachruf-Aufbauanfrage an den Server
- **14** Zuordnung der Herkunftstelefonnummer zu der Date

FIG. 11

FIG. 12

**1** Tel.komm.-endgerät

**2** Server

**10** Installation der Anwendungssoftware; Übermittelung der Date

**17** Empfangen der ersten Server-Telefonnummer

**11** Auswählen einer ersten Server-Telefonnummer und einer zweiten Server-Telefonnummer

**17-2** Empfangen der zweiten Server-Telefonnummer

**19** Zeitfenster für das Absetzen der ersten und der zweiten Sprachruf-Aufbauanfrage

**18** Absetzen der ersten Sprachruf-Aufbauanfrage an den Server

**18-2** Absetzen der zweiten Sprachruf-Aufbauanfrage an den Server

**14** Zuordnung der Herkunftstelefonnummer zu der Date

FIG. 13

EP 4 133 705 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014335822 A1